# EUROPEAN PATENT SPECIFICATION

(11) **EP 2 015 511 B1**
(45) Date of publication and mention of the grant of the patent: **24.02.2010**
(21) Application number: 08252324.2
(22) Date of filing: 08.07.2008
(51) Int. Cl.: H04L 12/24, G06Q 10/00, G06Q 90/00

(54) **Method and remote system for creating a customized server infrastructure in real time**
Verfahren und Fernsteuerungssystem zur Erzeugung einer benutzerdefinierten Server-Infrastruktur in Echtzeit
Procédé et système distant pour créer une infrastructure de serveur personnalisé en temps réel

(30) Priority: 10.07.2007 US 948891 P
(43) Date of publication of application: 14.01.2009
(73) Proprietor: StrataScale, Inc., Sacramento, CA 95834-8630 (US)
(72) Inventor: Mishra, Yatish C., Davis, CA 95616 (US); Tucker, Denoid K., Loomis, CA 95650 (US)
(74) Representative: Cross, Rupert Edward Blount

(56) References cited:
- WO-A-00/28713
- WO-A-2005/103970
- US-A1- 2005 203 910
- US-A1- 2005 228 856
- US-A1- 2006 195 832
- MARK J THOMPSON ET AL: "Quick storage provisioning for blades" 1 May 2005 (2005-05-01), RESEARCH DISCLOSURE, MASON PUBLICATIONS, HAMPSHIRE, GB , XP007135132 ISSN: 0374-4353 Section "2.0 External storage" on pages 1-2 Section "2.1 Instant OS install" on page 2 Section "2.5 Configurable Rules Wizard" on page 6

## Description

### CROSS-REFERENCE TO RELATED APPLICATIONS

This Application claims priority from U.S. Provisional Application Serial Number 60/948,891 filed on July 10, 2007.

### BACKGROUND

### 1. Field of the Invention

The subject invention relates to a system and method to enable a user to remotely build and customize a server along with the IT infrastructure that fits the user's needs on-line and in real time.

### 2. Related Art

One of the critical infrastructures in the world of electronic commerce is the server. Servers are a combination of hardware and software that accepts inbound connections from the user in order to service requests by sending back responses. Typical infrastructures associated with the physical server itself may include firewalls, operating systems, applications, virtual private networking (VPN), storage networks and disks, Local and Wide Area Network capabilities as well as features necessary for the maintenance and monitoring of the server.

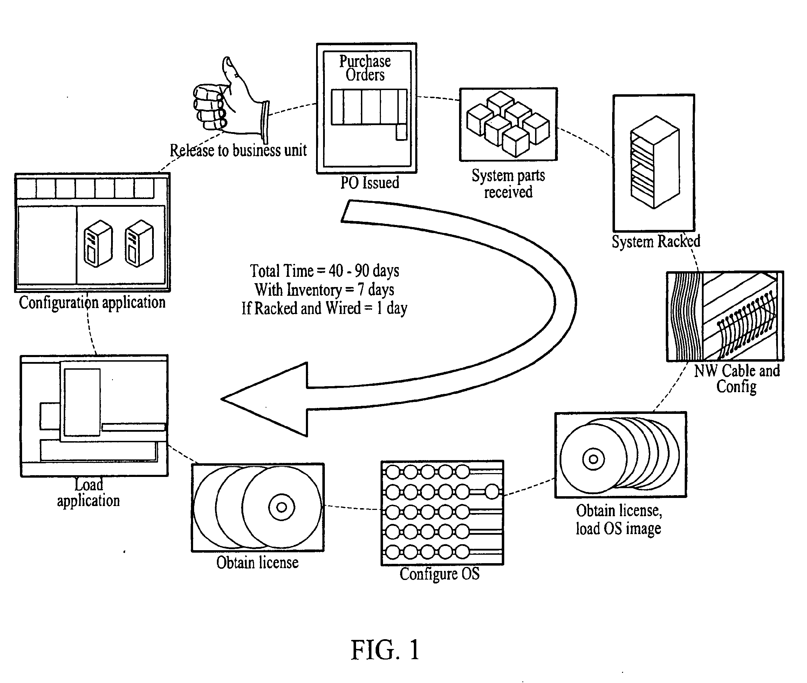

Creating the necessary custom-tailored server infrastructure and associated IT infrastructure is an arduous and time consuming process. In a typical situation, illustrated in Figure 1, a user will send in a purchase order request with customized specifications in regards to the physical server itself along with the accompanying infrastructure. The required hardware would then have to be ordered, racked and configured by hand in order to create a server that can interact with the outside world. Furthermore, licenses would have to be obtained for the various custom software packages that the user might require in the server. Such a process could cost the user weeks in potential commerce while the user is waiting for the customized server to be set up for connection to the outside world. Even if all of the necessary equipment is kept in inventory, it could still potentially require several days for assembly. This is especially troublesome in the situations where the user needs to construct additional servers at a short notice due to a sudden large influx of connections going into the user's other servers. Reconfiguring a server and associated IT infrastructure can be equally or more complex and time consuming.

One of the possible solutions is to incorporate a virtual layer using server virtualization software for allocating and delivering IT resources to clients in a shared manner. A virtual layer allocates virtual memory among a rack of servers; hence it is possible for multiple users to have information located on the same server. However, such an arrangement can lead to various problems. For example, conflicting software packages or other setups that are located on the same server can cause the server to not function as the users had intended and could potentially induce a server failure. A server hardware, operating system (OS) or application failures under this setup can affect multiple users, thereby potentially crippling multiple businesses. Performance concerns and licensing issues are common problems faced with operating virtualized environments. Furthermore, shared memory storage subsystems could lead to longer response times as memory is not efficiently allocated. It is evident that such a virtual layer will therefore create an inefficient allocation of resources. Numerous security concerns arise in a shared virtual IT environment.

The problems described above are exacerbated in a co-location implementation. In a co-location implementation, a company serves as a real estate-like entity in that it creates a secure and redundant server hosting physical facility, and leases floor space to third parties to locate their servers at the company's facility. The benefits to the third parties is that they do not have to invest in infrastructure required for their servers, which include physical and electronic security, redundant power and cooling delivery, etc. However, it should be immediately apparent that the third party entities would not want to share physical servers with other entities, but rather would want to contain their servers autonomous and physically separated from other third party servers.

Managed hosting solutions provides prepackaged server offerings with associated IT resources in a co-location hosting facility. Such services can include server maintenance, server monitoring, OS, specific applications, storage, back-up services, internet, firewalls, overall management etc. Again, this provide great value to the third party customers, in that they do not need to maintain a large IT department, but can rely on the hosting company, who possesses expertise and employs highly trained professionals, to provide the services required to maintain the severs. However, under such scenario it is also beneficial to physically separate the physical hardware belonging to each third party customer. Such physical separation enables enhanced security and enables tailoring specific services to specific customers. These offerings limit the customer's control of the server environment and often times require the client to wait hours and days for any changes to the configuration. Additionally certain desired features are simply not available to the end user in a managed hosted business model. Dedicated hosting provides less support than managed hosting as the provider only offers the physical hardware with minimal support services for OS and applications.

A further service enabled by the managed or dedicated hosted concept is software services (also referred to in the industry as software as a service (SaaS)). That is, normally when an entity sets up a server it uploads various software required for running the specific applications assigned for the server. For example, an entity may install an operating system and an Exchange application to create an email server. Then, it also needs to install various security software, such as a firewall, anti-virus software, etc. However, in the managed hosting environment the customer may simply buy "seat" licenses for the various software it needs and let the hosting company take care of all the licensing, installation, maintenance, etc., required for running the applications it needs.

Under traditional co-location implementations, the third party customer leases the real estate space, and purchases the hardware to be set-up in the leased space, either by its own personnel or using the co-location company personnel. On the other hand, an emerging implementation is to simply lease server capacity. That is, the co-location company purchases and sets up the servers and all the software requested by the third party customer, and the customer simply leases the computing capacity it needs with the seat licenses for the software it needs. While under such a model the same hardware may be shared by several customers, thereby reducing the cost of hardware, it may lead to complexity, reduced reliability and security issues as different customers require different applications and impose different load levels on the same physical machines. Therefore, it would be beneficial to separate the machines for different customers.

### SUMMARY

The following summary of the invention is included in order to provide a basic understanding of some aspects and features of the invention. This summary is not an extensive overview of the invention and as such it is not intended to particularly identify key or critical elements of the invention or to delineate the scope of the invention. Its sole purpose is to present some concepts of the invention in a simplified form as a prelude to the more detailed description that is presented below.

According to an aspect of the invention, a method and a remote system are provided for building a custom dedicated and optimally managed hosted server along with the necessary server infrastructure in real time. The invention aims to reduce the time required to create a customized functional server and IT environment to real time and to solve the inherent collision problems within a virtual layer setup. Embodiments of the invention enable the speeds and convenience that are traditionally associated with virtualization and server lease, while at the same time maintaining the security and reliability associated with traditional dedicated and managed hosting, where each customer has separate physical machines.

Various aspects of the subject invention provide a server resources allocation system that reduces the time-consuming process of building a custom made server. In this system, the users merely logs on to the system and specify the customizations that are required for their needs. The system then checks what hardware and software resources are available within the inventory and immediately begins making the necessary arrangements. These customizations are then done in real time without any assembly required. Unlike the allocation techniques that a virtual layer would enact, the central processing system will allocate separate physical server and memory storage subsystems according to the user's requirements in order to provide total autonomy of operation. The operating system and other software that the user requires will then be promptly uploaded and installed onto the server. Other critical infrastructures that the user might require, such as bandwidth requirements, firewall, backup storage, etc., are also installed and/or configured automatically. This server is then connected to as communication network, such as the Internet or customer private network (intranet), rendering it available for immediate use to handle the inbound and outbound connections from the user and capable of handling the user's needs. Furthermore, if changes in the server or IT environment are needed, the user merely has to make those changes in the user interface or through web services application programming interface (API) of the central processing system, and the server along with the accompanying infrastructure is updated in real time. Furthermore, any software licenses needed for the software installed is taken care of by the system.

According to other aspects of the invention, the system also monitors the available inventory that the vendor has and provides inventory reports so as to enable maintaining a sufficient level of hardware or software parts. For example, if the inventory indicates a short supply of licenses for various software packages, more licenses will be ordered. If there is a short supply of storage or physical servers, more hardware is ordered. This is done in advance in order to meet planned or unexpected demands that users might require. Supply chain management (SCM) inventory data including calculations of requirements and projections are communicated to the suppliers from the system over a secure network link in near real time to minimize inventory shortages or accumulations of excess inventory.

According to aspects of the invention, a method of creating a customized IT infrastructure, comprising: receiving IT environment request from a user via a user interface or API; providing the request to a central processing system; operating the central processing system to execute the request in a series of processes in comparison to the available inventory to: select a server from a plurality of available servers and allocate the server as an assigned server to the user; select storage device from storage facility and allocate the storage device as an assigned storage facilities to the user; couple the assigned server to the assigned storage facility; install and configure software onto the assigned server according to the request; and, connect the assigned server to a communication network.

The coupling of the assigned server to the assigned storage facility may comprise interposing a backend network between the plurality of servers and the network storage facility, and operating switches of the backend network to enable communication between the assigned server and the assigned storage facility. Connecting the assigned server to a communication network may comprise coupling the plurality of servers to a frontend network and operating switches of the frontend network to enable communication between the assigned server and the communication network. Connecting the assigned server to the communication network may further comprise assigning firewall from a pool of firewall resources to the assigned server. The method may further comprise: operating a monitoring module to monitor the inventory of available hardware and software components and using predictive calculations to issue a notice when more components are needed to be added. The method may further comprise operating the central processing system to automatically assign and track seat licenses to the user according to the user's request, and install software onto the server according to the seat licenses. The method may further comprise operating the central processing system to assign an automated backup and archive policy according to the request of the user. The method may further comprise enabling the user to apply API function calls to control the customized IT infrastructure. The method may further comprise constructing a library of scripts and enabling the user access to apply any script from the library to the customized IT infrastructure. The method may further comprise operating the central processing system to issue alerts when resources of the customized IT infrastructure should be increased or decreased. The method may further comprise operating the central processing system to provide the user with an estimated cost associated with resources increase or decrease. The method may further comprise operating the central processing system to store a network environment store point, enabling restoring of the entire customized IT infrastructure.

The storing a network environment store point may comprise storing data representing configuration of the customized IT infrastructure's servers, storage, OS, applications, storage network, network switches and routers, Internet connectivity, Intranet connectivity, firewall, IDS, IPS and load balancing. The method may further comprise operating the central processing system to store a snapshot of the data stored in the storage device. When a storage disk of the storage resources is released to the storage facility, the central processing system may be operated to wipe the storage disk by writing patterns of 1's, 0's and random data patterns. The method may further comprise: upon receiving an performance change request, operating the central processing system to migrate the assigned server to another server from a plurality of available servers and restoring the customized IT infrastructure utilizing the another server. The method may further comprise: upon receiving a repurpose request, operating the central processing system to store a snapshot of the assigned server and reboot the server using a modified configuration. The method may further comprise: upon receiving a request to restore a repurposed server, operating the central processing system to reboot the repurposed server the image of the assigned server. The method may further comprise: upon receiving a request to clone the customized IT infrastructure, operating the central processing system to: select a second server from a plurality of available servers, and allocate the second server as an assigned cloned server to the user; couple the assigned cloned server to the assigned image storage facility; and, connect the assigned cloned server to a communication network. The method may further comprise storing a golden image representing an IT infrastructure of a predetermined configuration, and when the IT environment request specifies to replicate the golden image, modifying the operations of the central processing system to: select the assigned server such that it has performance characteristics correlated to specification of the golden image; select the storage device such that it has performance characteristics correlated to specification of the golden image; and, connect the assigned cloned server to a communication network according to specification of the golden image. The method may further comprise, storing in the central processing system a list of users and enforcing an authority level corresponding to each user. The method may further comprise, storing in the central processing system a list of locks, each lock identifying a resource and at least one action that may not be performed upon the resource without authorization. The method may further comprise storing a plurality of IT environment images submitted by users, each representing an IT infrastructure of a predetermined configuration, and providing the list to other users. The method may further comprise providing remote user access to the assigned server at the keyboard, video, and mouse level, including access to bios level boot screens and command functions. The method may further comprise providing remote mounting utility, enabling a user to remotely mount a volume to the assigned server.

According to aspects of the invention, a system capable of creating a customized server environment in real time is provided, comprising: a plurality of servers; a plurality of storage disks; a switched network linking the plurality of servers to the plurality of storage disks; software components for a server infrastructure; a provisioning engine programmed to, upon receiving a user's instructions to generate a customized server environment: a. take inventory of the plurality of compute servers, plurality of storage disks, and software components; b. assign at least one server and one storage disk to the user to thereby define assigned computing resources and assigned storage resources dedicated to the user; c. configure the switched network to couple the assigned computing resources and assigned storage resources; d. configure the computing resources and assigned storage resources according to specification referenced by the user's instructions; and, e. install on the computing resources appropriate software components to thereby provide a customized server environment according to the specification referenced by the user's instructions. The switched network may comprise a backend network positioned between the plurality of servers and plurality of storage disks and a frontend network coupled between the plurality of servers and at least one of the Internet and an Intranet. The system may further comprise a storage network coupling the plurality of storage disks to the backend network. The frontend network may comprise a network switch and at least one intelligent high speed interconnect module, and wherein the network switch couples the intelligent high speed interconnect module to at least one of the Internet and Intranet.

The system may further comprise a secure portal enabling user communication with the provisioning engine. The portal may comprise a user interface and an administrator interface. The system may further comprise firewall facility, and wherein the provisioning engine is further configures to assign firewall to the customized server environment according to the specification referenced by the user's instructions. The system may further comprise a plurality of application adapters, each configured for communication between the provisioning engine and at least one of: compute servers, storage, OS, applications, storage network, network switches, routers, Internet connectivity, intranet connectivity, firewall, intrusion detection system (IDS), intrusion prevention system (IPS), load balancing and third party Enterprise applications. The plurality of servers may comprise a plurality of individual interconnected servers situated in server cabinets, wherein the plurality of storage disks comprises a network storage, and wherein the switched network comprises a backend network positioned between the cabinets and the network storage, and a frontend network coupled between the cabinets and at least one of the Internet and an intranet. The frontend network may comprise a first array of server switches and the backend network comprises a second array of server switches. The system may further comprise configuration inventory facility storing and tracking physical and logical inventory of all resources needed to support the automated near real time provisioning of IT assets. The system may further comprise authorization module storing authorize custodian's authorization roles for all other users for a designated account in the system. The system may further comprise a lock mechanism storing an authorized user's production lock on any component to a specific combination of group of users allowed to access the system to thereby prevents accidental change of an IT resource without having to confirm and authenticate that change to ensure availability of assets in the system. The system may further comprise an enterprise adapter coupling the system to other third party enterprise modules. The system may further comprise data replication module selectively replicating data stored on the plurality of storage disks. The system may further comprise disaster recovery module storing: environment configuration specifying hardware and software configuration of the customized server environment; and, data stored on the assigned storage resources. The system may further comprise a keyboard, video, and mouse (KVM) switch and KVM adapter providing remote user access to the assigned server at the keyboard, video, and mouse level, including access to bios level boot screens and command functions. The system may further comprise remote mounting utility, enabling a user to remotely mount a volume to the assigned server.

According to aspects of the invention, a computer readable storage medium holding computer software for executing on the destination computer is provided, the software embodying a method comprising: providing a user with an interface to enter user's instructions to generate a customized server environment; upon receiving the user's instructions, performing the steps:
a. query available servers to find a server matching specifications referenced in the user's instructions and assign the server to the user to thereby define assigned computing resources dedicated to the user;
b. query available storage disks to find a disk matching specifications referenced in the user's instructions and assign the disk to the user to thereby define assigned storage resources dedicated to the user;
c. configure a switched network to couple the assigned computing resources and assigned storage resources;
d. configure the computing resources and assigned storage resources according to specification referenced by the user's instructions; and,
e. install on the computing resources appropriate software components to thereby provide a customized server environment according to the specification referenced by the user's instructions.

Further aspects and features of the invention can be understood from the following description of various embodiments and illustrations according to the invention.
US 2005203910 discloses a storage service manager that facilitates an operator's task for managing large-scale storage facilities.

### BRIEF DESCRIPTION OF THE DRAWINGS

The accompanying drawings, which are incorporated in and constitute a part of this specification, exemplify the embodiments of the present invention and, together with the description, serve to explain and illustrate principles of the invention. The drawings are intended to illustrate major features of the exemplary embodiments in a diagrammatic manner. The drawings are not intended to depict every feature of actual embodiments nor relative dimensions of the depicted elements, and are not drawn to scale.

Figure 1 is a schematic of the prior art process for server and applications deployment for a company.

Figure 2 is a diagram of resource provisioning system according to an embodiment of the invention.

Figure 3 is a diagram of an automated provisioning engine and components according to an embodiment of the invention.

Figure 4 illustrates another configuration according to an embodiment of the invention

Figure 5 illustrates an embodiment for an architecture enabling the user interaction with the system according to the invention.

Figure 6 illustrates a functional diagram of a system according to an embodiment of the invention

Figure 7 illustrates main modules of a system according to an embodiment of the invention.

Figure 8 illustrates another example of architecture implementing the invention.

### DETAILED DESCRIPTION

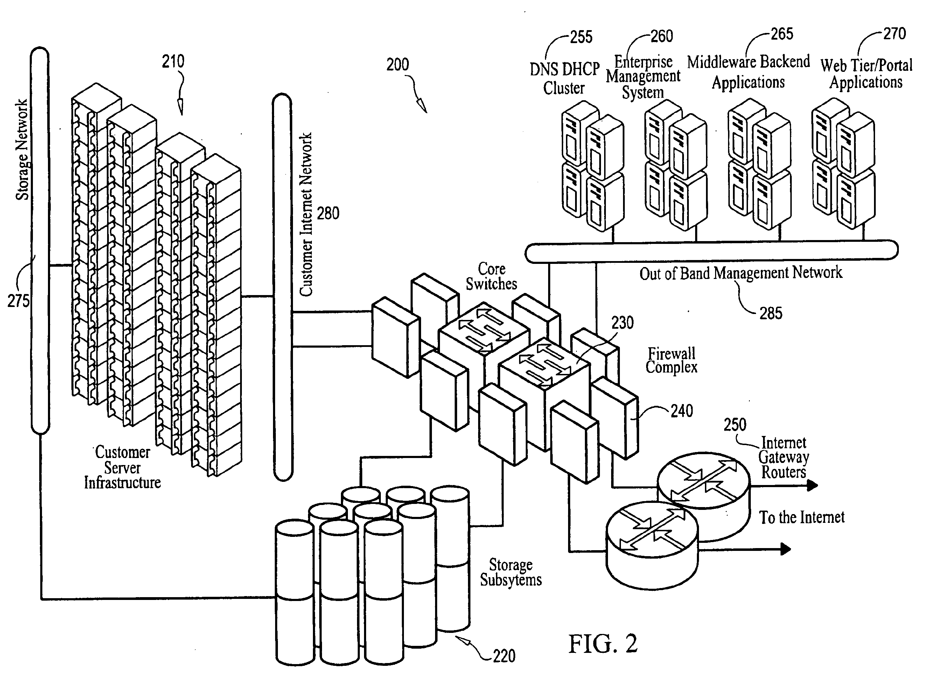

An embodiment of the invention will now be described in detail with reference to Figure 2. Figure 2 illustrates a high level architecture of a provisioning system 200 according to one embodiment of the invention. The architecture includes racks of servers 210, network storage subsystems 220, core switches 230, firewall complex 240, internet gateway routers 250, DNS/DHCP cluster 255, Enterprise management system 260, middleware/backend applications 265, and web tier/portal applications 270. These elements are interconnected using storage network 275, internet network 280, out of band management network 285, and other physical networks and switches (not shown) required for the physical connectivity of these elements.

The elements shown in Figure 2 form the inventory from which dedicated resources may be assembled to provide computing resources to a customer. In one implementation, the arrangement of Figure 2 is provided as "captive" resources, in that the entire arrangement is assembled within a company and all of the resources are made available only to organizations within the same company. However, a greater benefit may be achieved by implementing the arrangement of Figure 2 in a co-location implementation, where the various resources may be sold or leased to third party customers, while the actual hosting of the resources remains within the co-location company. This offering addresses the dedicated hosting and managed hosting market through a service provider model.

In the embodiment of Figure 2, utilizing the connectivity, switching, and other elements, as will be described more fully below, individual servers, e.g., individual blades or compact 1U servers, from server cabinets, e.g., racks 210, may be assigned to an individual entity. Similarly, individual storage resources, e.g., hard drives, optical disks, backup tapes, etc., may be assigned to the individual entity and be connected to the assigned servers using the connectivity, e.g., switches 230, enabled by embodiments of the invention.

The system also provides various services needed for accomplishing communication between the various servers and storage subsystems, between the servers and the Internet, and between the servers and the system administrator's maintenance console. The services include DNS/DHCP cluster 255, i.e., Domain Name System that translates human readable addresses to IP (Internet Protocol) addresses and Dynamic Host Configuration Protocol that is used by networked devices (*clients*) to obtain various parameters necessary for the clients to operate in an IP network.

An enterprise management system (EMS) 260 enables maintenance and management of enterprise solutions installed on the customers' servers. These applications broadly include fault management, configuration management, accounting/billing management, performance management and security management. These may include software applications that perform business functions such as accounting, production scheduling, customer information management, bank account maintenance, etc.

Middleware/backend applications 265 are available for customers' installation via the out of band management network 285. These are applications that don't interact directly with the user but provide the underlying functionality and services. Examples include applications relating to directory services, monitoring, back up services, and device management. Middleware examples include database systems, telecommunications software, transaction monitors and messaging-and-queueing software, etc.

Web Tier 270 are the user-facing applications that provide functionality directly to the end user. Examples include server and storage provisioning.

Out of band Management Network 285 provides for overall provisioning, management and monitoring of devices independent of individual customer networks. In general, customers will have visibility to their own resources in their own VLAN segments and do not have visibility to each other's VLANs or to the out of band management network. The latter provides the necessary overall control and monitoring functions necessary to implement the functionality of embodiments of the invention.

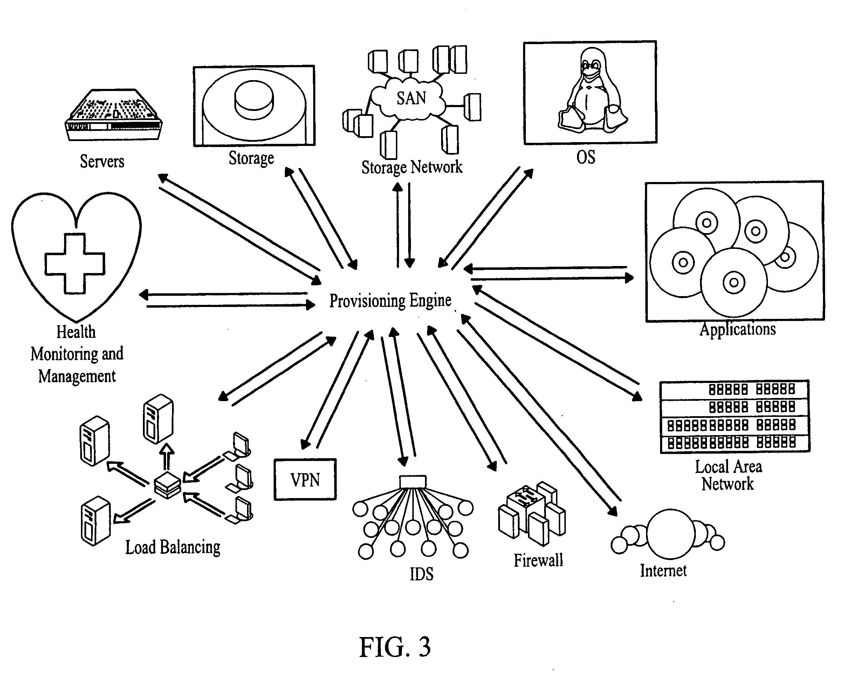

As illustrated in Figure 3, a provisioning engine has access to various resources of the system and is able to take inventory of these resources. The provisioning engine is also able to provision and configure these resources to satisfy a specific request of a specific user. To illustrate the highly advantageous nature of this embodiment, one may refer to Figure 1 of the prior art. Instead of the user having to issue a purchase order, the user merely logs onto its account and selects a configuration, i.e., server and storage requirement, OS, applications, security and bandwidth, etc. Then, rather than having to purchase, assemble and cable the components together, the provisioning engine simply selects the appropriate server available from racks 210, the appropriate storage resources available from storage subsystems 220, and configures the core switches to provide the proper connectivity between the servers and the storage, and the server and the Internet. The provisioning engine then loads, installs, and configures the selected OS and software applications. The configured system may then be released to the customer. Depending on the configuration requested, this operation may take seconds or minutes to complete, rather than days or weeks. The customer can be billed a one time nonrecurring charge (NRC) and ongoing monthly recurring charge (MRC) for the length of the contract period.

Notably, the provisioning engine makes it very simple and easy to reconfigure, clone, expand, delete, etc., the configuration. For example, assume the user decides that the particular server configuration selected is not sufficiently fast for the required performance. The user may simply log onto the account and select and configure a different server or associated IT environment configuration. The provisioning engine would then select an appropriate server from the racks 210, reconfigure the switches to couple the selected server to the storage facility, and load, install and configure the OS and software application on the newly selected server. The provisioning engine would then release the prior server to the available server pool. Similarly, if the user decides that the configuration satisfies the performance requirement, but another such configuration is needed, the user may simply select a clone request on the user's account. The provisioning engine already has all of the information required to select another server, select storage resources, configure the core switches, and upload, install and configure the OS and applications to generate a clone. The user may also upgrade to a larger server or downgrade to a smaller server in CPU and memory by a simple configuration command and the server's entire OS and application environment will be running on the a different performing system within seconds to minutes. This type of upgrade or downgrade is very time consuming and disruptive taking days to months in for companies using traditional IT environments. On the other hand, the user may simply expand the capability by, for example, selecting a larger size storage. The provisioning engine would then simply select additional storage and reconfigure the core switches to couple the storage to the server allowing the running server and OS to recognize the additional storage immediately without needing to be shutdown or rebooted. If the user elects to tear down the configuration, the provisioning engine simple instructs the core switches to disconnect the servers and storage, and then allocates the released server and storage to the available resource pool. As can be understood, all of these operations may be performed on the fly and in real time, as the user enters selections on the users account via the GUI. Moreover, using a VPN (Virtual Private Network) connection, the user is able to directly access its assigned servers and work with its assigned server much as if it had its own keyboard, mouse and monitor connected directly to the server.

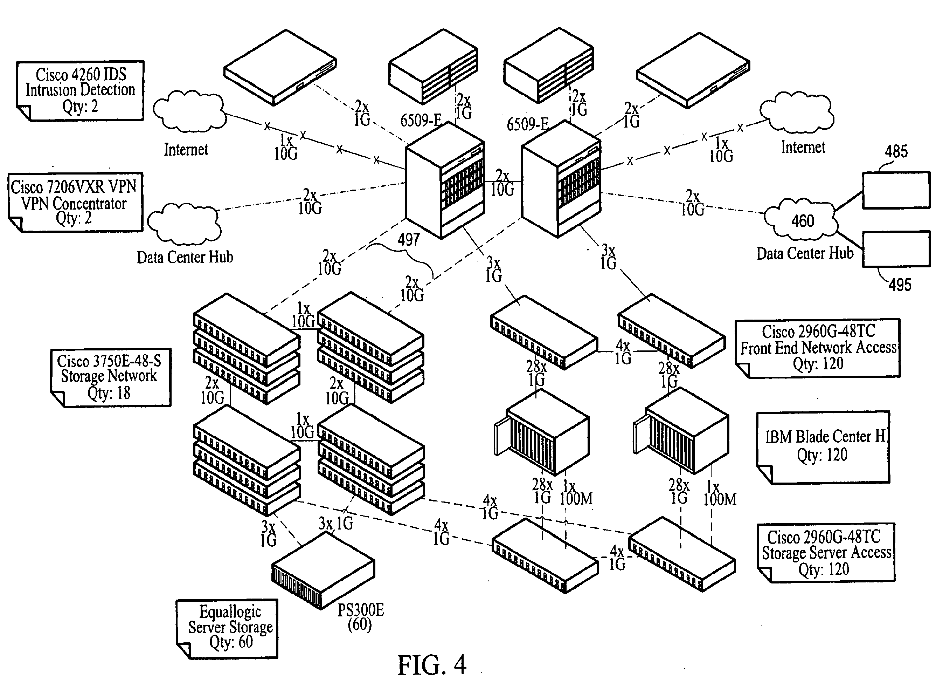

Figure 4 illustrates another configuration according to an embodiment of the invention. The embodiment of Figure 4 is somewhat similar to that of Figure 2, but provides more concrete examples of the various elements that may be used. In Figure 4, cabinets or racks of servers 410 have individual servers installed therein, e.g., blade servers or compact 1U rack servers. In one example, the racks are implemented as a plurality of IBM BladeCenter® chassis but could be any standard servers with remote management capabilities. The servers are coupled to frontend network and backend network. Solid lines represent the frontend network, while dashed lines represent the backend network. Each of the frontend and backend networks comprises at least one Intelligent high speed interconnect module. In this embodiment the frontend network is implemented with blade switches 434, example, Cisco CIGESM, an intelligent Gigabit Ethernet switch module. A similar arrangement of Cisco CIGESM switch modules are used for the backend blade switches 432.

The backend network is coupled to a storage network. The storage network is implemented using storage network switches 422 and server storage 420. The storage network switches are implemented using, e.g., Cisco Catalyst 3750-E stackable wiring closet switches. Together with the blade switches 432, the storage network switches 422 enable pairing of individual servers from racks 410 to individual storage hardware from storage 420. In this particular example, storage 420 is implemented using Dell's EqualLogic disk array but could be any solution such as iSCSI, direct storage, fibre channel, fibre channel over Ethernet, etc. Therefore, individual disks or disk arrays, e.g., RAID array, may be assigned to individual blades from racks 410, thereby creating configurable server computing facility without having to rack any hardware and without having to wire any hardware. In this manner, individual servers and disks may be assigned to a customer, without complication of sharing physical resources with other customers.

The frontend network blade switches 434 are coupled to access switches/routers 480, which form part of the frontend network. In this example, the access switches/routers 480 are implemented using Cisco Catalyst 6500-E switch, that is set up as a level 3 switch - basically a router that switches based on level 3 information. This enables routing at higher speeds as the routing is done in hardware (generally ASIC), rather than using code executed in microprocessors. The access switch enables access to and from the Internet or other networks, such as a data center hub (in Figure 4 dash-x-dash lines represent connection to the Internet). The operation of the access switch is enhanced using intrusion detection 440 and router 455. The intrusion detection 440 in this example is implemented using Cisco 4260, enabling protection from maleware such as worms, viruses and malicious traffic, while the router is implemented using Cisco 7206VXR router.

In this embodiment, there are four ports total on each blade in the chassis 410, two on-board for Internet connectivity and two more provided by an add-on iSCSI adapter card for external storage connectivity. There is one blade switch (CIGESM) per port that handles that particular port on all the blades in the chassis. The two blade switches connected to the ports designated for Internet connectivity are connected directly to the core switch-routers 480 for external network access. The other two are for storage and never need external connectivity, so all traffic would generally be between the storage devices and the servers. In this example, the core switches are not burdened with unnecessary storage traffic nor does the storage network need the advanced features the core switches provided, therefore all of the storage network is coupled via an extremely fast but feature-light 3750-E switches 422. This allows the storage network to be scalable (the 3750E's are stackable) while reducing the cost and complexity of rolling all traffic up to the core infrastructure and doubling the port requirements.

As can be understood from the above, the entire arrangement shown in Figure 4 is constructed beforehand, and is managed by an administrator console (not shown). An online user interface is provided for users to logon and select configurations. The system then operates the various switches so as to connect appropriate resources, e.g., blade or compact 1U servers and storage resources, so as to construct the requested configuration. The appropriate OS and other software are then loaded, installed and configured according to the user's input.

The arrangement shown in Figure 4 is referred to as a farm. For scaling, additional similar farms, e.g., farms 485 and 495 may be coupled to each other via the data center hub 460. Communication among the hubs may be accomplished using, e.g., VLAN's via the access switch/router 480. In Figure 4 dash-dot-dash lines represent VLANs. In this manner, each server on any farm may be paired and communicate with any storage disk on any other farm. Moreover, the farms may be placed in the same location, across town, in another state, etc.

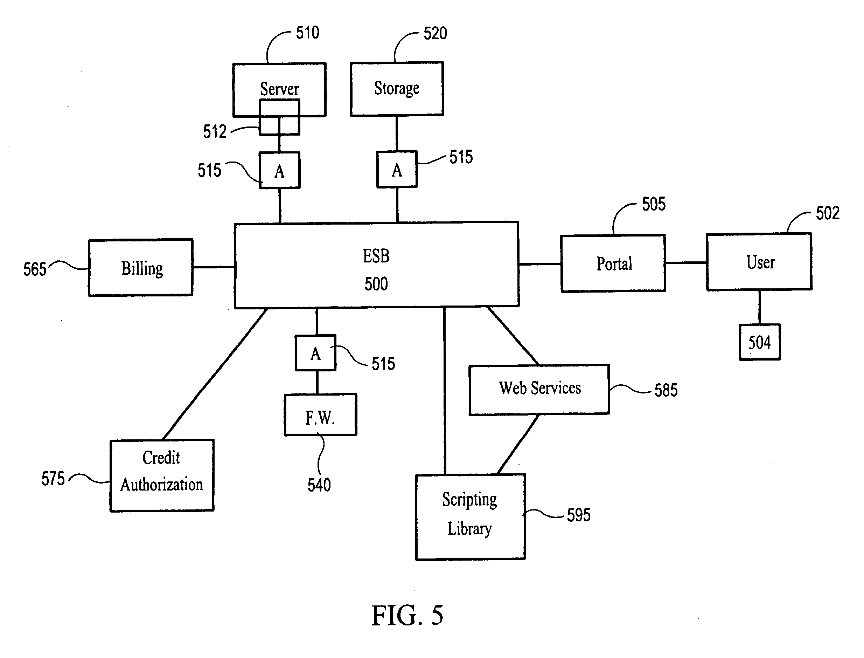

Figure 5 illustrates an embodiment for an architecture enabling the user interaction with the system according to the invention. In Figure 5, an enterprise service bus (ESB) 500, which is coupled to portal 505, is the central control logic system for most of the system's functions and also operates as a queuing engine. Portal 505 enables users' computer 502 access to the system to enter configuration and other requests. The requests are queued by the ESB 500, which services the requests by scheduling scripts to the proper resources. The ESB 500 establishes two-way communication with various custom developed and commercial applications via connectors or adapters. In this example, the ESB 500 is coupled to various resources via adapters 515. The resources include server racks 510, storage system 520, firewall 540, etc. The adapters 515 enable communication between the ESB 500 and various different resources and resource types. For example, servers 510 may include servers from IBM, Dell, etc., installed in the same of different cabinets or racks, so the adapters enable communication to any brand or type of servers. Meaning, all of the resources may be off-the-shelf resources and need no modifications to function properly in the environment of the invention. Rather, the adapters enable communication and configuration of various standard current and future resources. The benefits of this ESB architecture include a highly scalable control and queuing engine, the ability to integrate with third party applications quickly, and the flexibility to integrate with other applications in the future.

To enable online purchase or lease of any computing environment configuration, the ESB 500 is also coupled to a billing module 565 and credit card module 575. The billing module provides the pricing corresponding to the requested configuration. Once an order is placed, the billing module 565 may activate the credit card module 575 to enable verification and charge of the credit card. If no credit card is used, the billing module may issue a billing statement. The ESB 500 is coupled to various corporate system for automation, e.g., enterprise resource planning (ERP) financial system, corporate SCM system, customer resource management (CRM) system, etc.

When an order is placed via the portal 505, the ESB 500 assigns a job number to the order and begins calling scripts in order to complete the provisioning of the customer's ordered environment. The major steps include, calling the hardware provisioning scripts and decrementing the inventory, updating the CMDB (configuration management database), enabling monitoring, enabling service level agreements, creating portal account, configuring automated billing, generating legal contracts, and issuing login information to the customer.

According to a feature of this embodiment, a web services module 585 is also coupled to the services bus 500. The web services module 585 enables experienced users to directly access their resources. For example, a user may want to generate a back-up image of a database residing on storage facility 520. The user may access the portal 505 and request a backup of the database via the portal 505, which would then transfer the request to the ESB 500. On the other hand, the user may directly access its resources via the web services module 585, allocate storage resources for the backup files, obtain a snapshot of the database, and store the snapshot in the allocated storage facility. This may be done using, e.g., a secure VPN connection directly to the user's assigned computing resources.

According to another feature of this embodiment, a scripting library 595 is provided. The scripting library enables users to perform various operations and various combinations of operations, using various scripts that are pre-stored in the scripting library. The scripting library may be accessed from the web services module 585 or from the portal 505. The scripting library may include scripts to cause the system, for example, to duplicate a given server, add storage resources to a given server, copy data from one storage disk to another, suspend server, add firewall, perform conditional actions, e.g., if event x occurs, perform action y, etc. Using this library, users are able to manage the resources and perform various operations by combining scripts from the library. For example, a user may be able to combine scripts to respond to events, e.g., if a particular server's load is over a given threshold, duplicate the server and run both servers in parallel, or add storage resources, or add communication bandwidth, etc. While this example is somewhat simplistic, it should be understood that the power of this feature is in enabling various new services without having to reprogram the entire system. Since all of the scripts in the scripting library have already been tested and are known to function properly in the system, a user may use any combination of these scripts at any order to generate new tailored functions. The various scripts can be provided as menu items on the portal as well for the user's selection.

In addition to the above, the user is also given the ability to remotely access its assigned servers at the console keyboard, video and mouse level, including access to bios level boot screens and command function. This is done by utilizing a KVM (keyboard, video, mouse) switch 512, either installed in the server or coupled to it externally. The KVM switch intercepts all keyboard, video, and mouse signals and an Intelligent Platform Management Interface (IPMI) is utilized to route these signals between the server and the user via portal 505. This may be done using a Java applet, etc., in conjunction with the IPMI. In this manner the user can directly access all levels of the server as if user's keyboard, mouse and monitor were directly connected to its server.

The architecture of Figure 5 may also include a mounting utility, enabling the user to mount a device 504, that is local to the user, onto the remote server 510. Local device 504 may be, for example, an optical drive, a disk volume, an ISO image, etc. The device or volume 504 can be detected and accessible by the server at the hardware boot stage or within the OS, regardless of the location of the user 502. The access is secured using, e.g., SSL encryption. The benefit of such an arrangement for the user is, for example, to use this connection as a utility to upload an OS, an application, etc. to the server. For example, if the user has a CD-ROM with files stored on it that need to be uploaded to the server, the user may simply mount its local CD-ROM to the server, so that the CD-ROM shows up as an attached driver on the server and the user can upload the files in that manner.

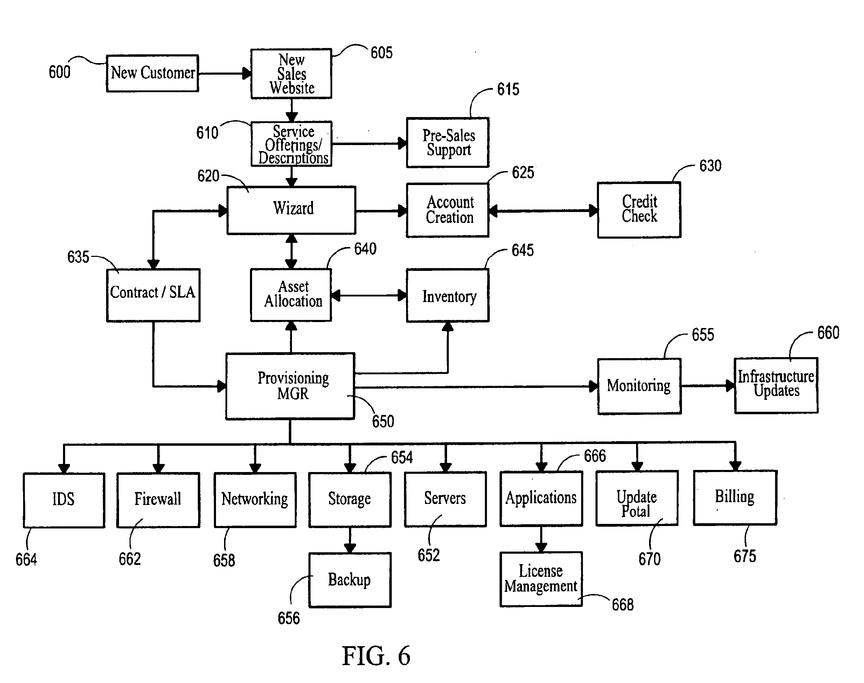

Figure 6 illustrates a functional diagram of a system according to an embodiment of the invention. A new customer 600 enters the system by visiting the new sales website 605. The website 605 provides descriptions of the services, 610, available via the system. A pre-sales support module 615 provides assistance with special inquiries by the new customer. A wizard 620 enables the customer to open a new account using the new account module 625 and credit card module 630. In opening the account, a contract/SLA (service level agreement) module 635 is also activated to have the customer accept the service agreement according to the level selected by the customer. Once an account has been created, the user may allocate assets using the asset allocation module 640. The asset allocation module 640 receives inventory updates from the inventory module 645.

Once the customer selects the various hardware and software, the provisioning manager 650 selects the appropriate resources and implements the appropriate switching and software loading, installation and configuration. The provisioning manager also updates the inventory module 645 as to the resources used in assembling the customer's configuration. Furthermore, the provisioning manager 650 also sends the configuration to the monitoring module 655 to enable monitoring of the configuration and implementation of any new updates from infrastructure update module 660.

Among the resources available to the provisioning manager 650 are servers 652, storage 654, including back-up facilities 656 (e.g., tape, disk-to-disk or optical drive backup systems), networking 658, firewall 662, and intrusion detection system 664. Additionally, various applications 666 may be installed on the servers 652, upon which the proper license is activated using the license management module 668. The information of all of the resources used for the account is transmitted to the update portal 670 and to the billing module 675 for proper billing

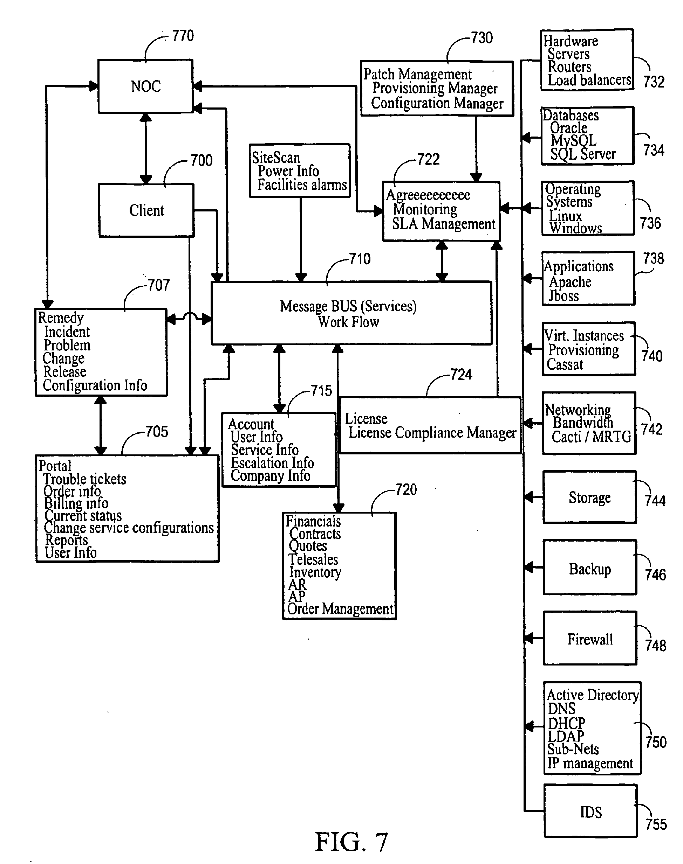

Figure 7 illustrates the main modules of a system according to an embodiment of the invention. A client or user 700 may access the portal 705 or the message bus 710 directly. Direct access to bus 710 is enabled only after an account has been established and resources allocated. The user is also able to script access directly to the message bus via web services and automate typical portal functions on their own, as explained above with respect to other embodiments. Portal 705 enables the user to enter a trouble ticket, order information, obtain billing information, check the current status of the account, change service configurations, run various reports, enter and change the user's information, etc.

The bus 710 enables communication among the various modules. The account module 715 manages account information, including user information, service information, escalation information and company information. The financial module 720 manages contracts, quotes, sales, inventory, accounts receivable, accounts payable, and order management. Agreements and licenses are managed by agreements module 722 and licensing module 724. Trouble tickets are managed by remedy module 707, which monitors incidents and remedies. Patch management 730 includes provisioning manager and configuration manager, which provision and configure the appropriate resources and switches to provide the service level requested by the customer.

As in previous embodiments, the various resources available to customers include hardware 732, which include servers, routers, load balancers, etc., databases 734, e.g., Oracle, MySQL, SQL Server, etc., each of which may be installed and configured on a selected server. Operating systems 736, e.g., Linux, Windows®, etc., may also be loaded and installed on any selected server. Various applications 738, e.g., Apache, Jboss, etc., are available for loading and installation. A virtualization instances module 740 enables installation of virtualization software on the selected server, should the customer wish to run virtualization on the configured server. Networking module 742 enables provisioning bandwidth and monitoring traffic using, e.g., Cacti or MRTG (multi router traffic grapher).

Storage 744 may be implemented as collections of single disks or as disk arrays, e.g., RAID array. Data in storage 744 can be backed up in backup facility 746, e.g., disk, tape, optical storage facility, etc. While not shown in this particular example, various storage drives, such as optical drives may be connected to servers directly. Firewall 748 may be applied to any selected network, according to the customer's selection. Communication over a network, e.g., the Internet, is facilitated by the active directory module 750, which includes DNS, DHCP, LDAP, Sub-Nets and IP Management resources. Finally, intrusion detection system (IDS) and/or intrusion prevention system (IPS) may be applied to any server as selected by the customer.

The Network Operation Center (NOC) 770 represents the main support organization for system. All technical administration as well as help desk organization are a functions of the NOC. Also, all of the monitoring and management of the customers' systems as well as the system infrastructure will be handled by the NOC. Of course, all of the provisioning and management tools will be made available to the customer as well through the client portal.

The following is a description of an example for a portal process. The portal web connection may be implemented using high grade encryption, (e.g., RC4 128 bit). A user may log on to the portal using username and password obtained during the initial registration and setting up the account and may be able to provision, configure and deploy IT environment from the portal. For example, the customer may be able to select the number and type of servers (e.g., number of processors/cores, amount of RAM, etc.), whether to run virtualization software on the servers and, if so, what software to use (e.g., VMware, Virtual Iron, etc.), the number and type of operating systems (e.g., Linux, Windows®, etc.), number of networks, amount of disk storage and its utilization (storage may be implemented in e.g., RAID 1, RAID 5, etc.), firewall speed, IDS, Internet bandwidth (e.g., Mbps base and Mbps peak or total amount of transferred data in a given time period), number and type of applications (e.g., IIS, MSSQL, Oracle, VMware Server, JBoss, Apache, Perl, etc.). According to a feature of the invention, the customer may also set a "spending amount" to enable provisioning and deployment of additional resources up to the set spending amount.

In adding a new server, the customer would be able to set a server name, select the type of hardware (e.g., number of CPUs, processor speed, local memory (RAM) size, etc.), select the OS (e.g., Windows® Server, Red Hat® Linux, etc.), setup and configure server failover (checkbox), setup and configure LAN network, Internet bandwidth, firewall, IDS, monitoring parameters and load balancing. Of course, the user may also be able to simply select an existing configuration and replicate it or delete a server configuration. Notably, the checkbox is a toggle on the "Server Provisioning" page of the portal that tells the system whether or not the system should automatically migrate to a new compatible server should it detect a hardware failure or meet predefined monitoring failover conditions on the current one. This is an advantageous capability that is made possible by the system's inherent knowledge and control over the customer's entire infrastructure.

Other functions available to the user include creating snapshots of a server, restoring a previously stored snapshot, setup and configure VPN connectivity, and flagging a server as failover. The user has the option of modifying current server environment, e.g., selecting or deselecting a failover checkbox, change or create a LAN network, change Internet bandwidth, change firewall, IDS, load balancing, and VPN connectivity settings, and increase disk space, etc. In managing the disk space the user is able to setup, configure, change size or delete a dedicated or common disk space for sharing by the servers. The user is also able to mount a local optical drive, disk volume or ISO image to a remote server detected and accessible by the server at the hardware boot stage regardless of the location of the remote user. Notably, while in the prior art various systems may utilize restore points to restore a server, restore data on a hard disk, the current invention enables something totally new: a restore point of an entire server environment. That is, since all of the resources provisioned for a particular server environment are recorded and monitored, the system may easily take a snap shot of the entire environment, including conventional parameters, such as software installed on the server and data stored on the disks, but also new parameters, such as bandwidth allocated, firewall parameters, etc. Thus, the inventive system may easily reconstruct a clone server and associated IT environment in case of failure or for increased capacity.

The portal also provides the current status of all the IT resources of the customer. Reporting may include server, storage, network and application health, including historical data of events. The user is able to view SLAs and near-real time performance to the established SLAs, billing information, bandwidth utilization, list of backup snapshots, disk size and description, and journaling of all provisioning activities. It also provide facility for establishing authorization level for various users in the organization. The authorization levels define which users are allowed to perform what functions, e.g., configuration changes, billing changes, etc. As indicated above, the users will also be able to enter, view and track trouble tickets via the portal.

In addition to reporting, the system may also provide the user with active management suggestions or actions. For example, the system may easily collect statistics about usage across the entire system. So, for example, the system may easily identify that on the last day of each month usage of accounting server is substantial. The system may then suggest to add extra capacity only for the duration of the high load. Similarly, the system may predict high usage in specific times of the year, e.g., prior to tax day, or during high shopping season, e.g., Christmas shopping season. The system may automatically suggest increasing the resources. Since the system may collect statistics across the entire system, it may easily develop predictive model to determine the period to increase the resources and also the amount of increased resources.

Conversely, the system may also issue alerts to the user when the resources allocated are excessive in view of current usage. That is, as the system monitors the usage on the user's server environment, it may determine that certain allocated resources are underutilized. For example, it may be that the assigned bandwidth is to high for the amount of traffic going to the server. The system may then issue an alert proposing to the user to select a lighter resource allocation, thereby saving the user unnecessary expense.

Using collected statistics the system may also generate predictive billing. For example, as noted above, the system may estimate that during December a certain user's server environment may need an increase in computing and bandwidth capacity of 30%. The system may then estimate the corresponding increase in costs associated with such an increase in resources and provide the user with an estimate, enabling the user to budget for such an increase.

According to an embodiment of the invention, the following process is used to allocate and configure resources according to a user's requirement. The user logs in to the provisioning engine via a user interface. The user is then prompted to select the computing capacity needed, the storage capacity needed, the OS system to be loaded onto the server, specific applications required, etc. The provisioning engine will then proceed to take inventory of available resources and reserve corresponding resources to the user's account. Once the resources have been reserve, the provisioning engine would run a setup process so as to associate the server with the storage and other selected resources, e.g., optical drives, backup storage, etc. The provisioning engine would then load and install the selected OS, and would make appropriate notation for the license required for use of the OS. The engine would load and install of the required applications and make appropriate notation for licensing requirements.

Other processes may also be employed in this setup stage, such as allocation of an IP address to a specific server, construction of a virtual local area network, allocating specific amounts of internet and internal bandwidth, creating a customized firewall along with various security configurations, a customized backup system in case of server failure, a domain name system (DNS) configuration, installation of a specified operating system, router configuration based on content, generating a vulnerability assessment, creating monitoring systems and other specifically requested hardware and software requirements. In this particular embodiment, each process is run in isolation of each other. They will each be started by the central processing system and will return the status of each process back to the system. This information is then given to the user, who can then view the building progress of his server infrastructure in real time.

While in the above example the engine assembled the server upon the user's indication, alternatively the engine may take inventory but would not reserve or configure the system yet. Instead, the server would provide pricing information to the user, which would include leasing or purchasing of the resources, and payment for the various software licensing required. The user may then make any changes before making a final decision to setup the system. Alternatively, the user may be simply prompted to enter high level requirement, such as business size or volume, and then the engine would provide a proposal for the proper computing capacity, storage capacity, suggested software package, etc., and pricing for such a proposal. This is especially helpful for users who are not highly technical.

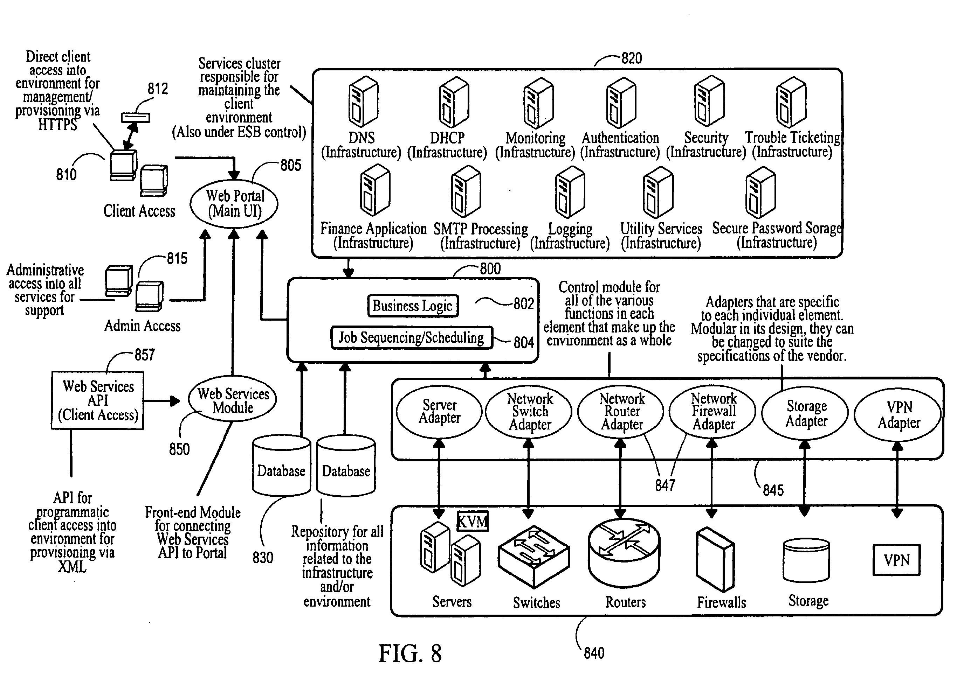

Figure 8 illustrates another example of architecture implementing the invention. As with the embodiment of Figure 5, an Enterprise Service Bus (ESB) 800 is at the heart of the system of Figure 8. The ESB 800 includes a business logic module 802 and a job sequencing/scheduling module 804. The job sequencing/scheduling module 804 simply provides the queue for the various jobs. The task of the business logic module 802 is to make decisions on what functions to perform, on which elements (hardware), and in which order to accomplish a task. As a simplified example, if the task is to "clone" an existing server environment, the user simply select the task with a click of a mouse on the user's GUI or by making an API web services call to the system. The sequencing/scheduling module 804 would place the request in a queue, and at the proper time the business logic 802 would execute the cloning request by translating the "cloning" request into a set of sub-functions such as: copy boot image of the existing storage facility onto a newly allocated storage facility to generate a new image; attached the new image to a newly allocated server; assign an IP address (DHCP function) to the new blade; power on the new blade.

The main user interface to the ESB 800 is the web portal 805. Client 810 may access the ESB 800 for managing its resources and provisioning via, e.g., HTTPS. Administrative access 815 is also enabled via the web portal 805, so that an administrator may provide services and support for the various customers. The ESB is also connected to and controls the infrastructure service cluster 820. The infrastructure service cluster 820 is responsible for maintaining the customers' environments under the ESB control. As in prior embodiments, the service cluster 820 include DNS, DHCP, monitoring, authentication, security, trouble ticketing, finance applications, SMTP processing, security, utility services, and security password storage. Database 830 stores information relating to the infrastructure and the environments.

Customer environments are generated using the resources 840, which include servers, switches, routers, firewalls and storage, KVM switches, VPM, etc., as explained above with respect to other embodiments. The resources of the customer environment are coupled to the ESB 800 via element control module 845, which includes the various adapters 847 that enable communication between the resources and the ESB. The adapters are specific to each resource and may be easily changed to suit the specifications of each vendor or resources. In this manner, the ESB 800 may be used to handle any brand of servers, storage disks, switches, routers, etc. This arrangement also enables direct user access via VPN, user operation over the server using KVM switches, and mounting of local devices 812.

The web services module 850 provides a mechanism to programmatically perform various tasks that can be done through the client web portal. This allows customers to create custom scripts that control their environment externally, or to enable third party vendors to write application "add-ons" to offer to mutual customers as a value-added product or service. A customer would prepare or select a script to be applied to its environment (web service API 857). The web services module 850, which is basically a port, would receive the script 857 and would transmit it to the system for execution on the customer's environment.

As can be seen, the illustrated embodiment enables the user to access all functionality of the system through two way communications of web services API function calls without having to access the portal system. All API function calls via command line interface, scripts or other interpreted or compiled languages can be executed with return codes and automatically update the portal inventory and configuration in real time. All activity may be authenticated and logged to ensure accountability and security of the system.

As can be understood form the above description of various embodiments of the invention, some features of the present invention include:
1. Self-provisioned online end user based portal tool
   a. User selects hardware, OS, applications, configurations and any features.
   b. The IT environment can be managed from this rich graphics oriented portal (add/delete/modify).
   c. All customer reposting is done through this portal.
   d. All billing can be managed through this portal.
2. After user selects desired configuration, the IT environment is built in near real time within minutes
   a. No manual installation, wiring, configuring or setup of applications is needed as all tasks are done automatically.
   b. For example, user selects 2 dual-core 3GHz processor, 8GB memory, 200GB storage, and Windows 2003 server with IIS. Upon confirmation of configuration and price, the entire environment is built in real time automatically within minutes while the user waits. Upon completion, the user can logon to the newly created and configured server.
   c. All IT environments are also built and reconfigured in real time. This includes the LAN, internet, storage, firewall, IDS, load balancing, data replication and backup. What would normally take days to months is done in just minutes.
   d. The servers can be instantly deleted and recreated on the fly in real time from the portal under 100% control of the user.
3. The user has console access to the server, which is not available remotely in a service provider hosting environment.
   a. Through a secure web page, the customer is able to interact with its provisioned server at the console level, which is identical to being in front of a monitor/keyboard/mouse that is directly attached to video and USB ports.
   b. The user can actually see the server boot at the BIOS level and interact with the system as if the use is directly in front of the system.
4. The system may be fully integrated with the Operational Support System (OSS) and ERP Financial System
   a. The system may be integrated with the corporate ERP systems such as GL, AR, AP, cash, order management, service contracts, purchasing, inventory, quotes, sales tools etc.
   b. The system may be integrated with corporate OSS systems such as trouble ticketing, IT monitoring/management, change management, ITSM system, auto escalation, building management systems, internal application Matrix etc.
   c. The resulting environment is a fully automated order processing, billing, contracts, IT environment management, etc.
5. The system may have both bare metal and virtualization support.
   a. The system may support full automated provisioning of bare metal physical servers and associated IT environment (this is currently unavailable in the market).
   b. The system can also allow for the provisioning of virtual servers within physical servers. This allows for multiple systems at a discount to be created within a physical system. This feature may be implemented using, e.g., VMware, Xen, Parallels or Microsoft Virtual Server to perform this function with in-house developed code to automate and manage these environments.
6. Further features
   a. Automated server provisioning including hardware, OS, applications and IT support.
   b. Instantaneous snapshot of a server which can be restored and booted from one or multiple servers within minutes.
   c. Automatic failover - if a server fails, a replacement server is built automatically and is swapped for the failed server within minutes (no need for clustering) without manual intervention.
   d. Automatic scalability - if a pool of servers suffer from performance degradation, then additional servers are added for load balancing to maintain performance. The system also provides for an easy methodology and process to upgrade a user's application environment by a simple reboot process taking just minutes. The system may be instructed to migrate the existing server and IT environment to a larger higher performing server in CPU or memory capacity which will be operational within minutes while preserving all OS, application and existing IT environment configuration and capabilities. The system may also downgrade a server to a slower performing CPU or memory capacity with the same process.
   e. Server repurpose - unutilized servers can be repurposed for certain functions as needed. For example, test/development systems can be automatically repurposed as financial reporting systems at month end and then returned to original function. No data loss will occur on the original system. The system will enable a user to repurpose a server with the associated IT resources within minutes to minimize costs and speed deployments of IT solutions. For example, a running Windows server could be saved as a snapshot, shutdown and rebooted onto a Linux image to become a Linux server with the associated IT environment. The state of the original Windows server will be maintained and the server may be returned to its original configuration at any time in the future. This feature is ideal for utilizing resources that may be non critical or idle at certain times of the day or month.
   f. High speed near real time data replication to safe guard data within the data center as well as remotely to another data center facility for Disaster Recovery. Storing a point in time copy snapshot of the disk data may be done within seconds regardless of the volume size, enabling restoring of the entire user's disk environment including OS, applications and all configurations within seconds or minutes. The point in time copy may be implemented as a virtual "copy on write" technology to minimize actual disk space utilization and to speed up the performance of the snapshot process. The snapshot process may be initiated from the portal or API as a one time event or fully automated to create point in time copies on an established schedule with any combination of minutes, hours, days, weeks, months or years.
   g. Online instant backup and quick restore of data under a fully automated environment to reduce Return to Time of Operation and Return to Point of Operation.
   h. Ability to store an entire IT environment at one or multiple store points, enabling restoring of the entire user's IT environment within seconds to minutes locally or remotely to an alternative location for disaster recovery. The point in time copy snapshot of the IT environment store point includes components such as hardware and software of compute servers, storage, OS, applications, storage network, network switches and routers, Internet connectivity, Intranet connectivity, firewall, intrusion detection system (IDS), intrusion prevention system (IPS) and load balancing. The snapshot process may be initiated as a one time event from the portal or API or fully automated to create point in time copies on an established schedule with any combination of minutes, hours, days, weeks, months or years. The system may support true disaster recovery and business continuance for the end user by not only replicating the user data but also recreating the entire hardware and software components of the IT environment to an alternate location within minutes. The failover of the servers and associated IT environment is automated and selected by the user as on option from the system's menus.
   i. When a disk is released to the pool by any IT environment, according to one feature the disk is wiped before it can be reassigned to another environment. According to one feature, the disk is wiped by writing random patterns of single or multiple 1's and 0's. Also, any backup copies of volumes of the disk may also be wiped.
   j. Cloning: A server with all it's associated IT infrastructure may be cloned to a single or any number of additional servers within minutes with or without rebooting the original server. The cloned servers and IT environments may be identical in OS and applications and only key components such as networking addresses will be changed to ensure proper operation.
   k. A detached or attached disk image or snapshot of an online or offline server containing OS, applications and data or any combination may be converted to a gold master image. Gold master images may then be utilized to rapidly build and deploy new servers with the same disk data within seconds.
   l. Authorities. The system allows the authorized custodian or master user to securely establish roles for all other users for that account in the system. Assigned users may be placed in groups or individually selected to limit access to read, write, execute or delete of any asset or function in the system.
   m. Locks. The system enables an authorized user to create a production lock on any server or IT component to a specific combination of group of users allowed to access the system. Production lock prevents accidental change of an IT resource without having to confirm and authenticate that change to ensure availability of assets in the system.
   n. The system supports a community environment to exchange disk images of OS and applications to be shared between users to quickly build servers within minutes. Independent software vendors and software as a service vendors may also submit disk images to promote the sale of their respective products and solutions.
7. Enhancements Features
   a. The system can run as an instance to manage localized and isolated pools of servers for large Enterprise customers for security.
   b. The system can be sold as an application to be licensed and operated by companies to manage their environment rather than having to purchase systems as a service.

It should be understood that processes and techniques described herein are not inherently related to any particular apparatus and may be implemented by any suitable combination of components. Further, various types of general purpose devices may be used in accordance with the teachings described herein. It may also prove advantageous to construct specialized apparatus to perform the method steps described herein. The present invention has been described in relation to particular examples, which are intended in all respects to be illustrative rather than restrictive. Those skilled in the art will appreciate that many different combinations of hardware, software, and firmware will be suitable for practicing the present invention.

The present invention has been described in relation to particular examples, which are intended in all respects to be illustrative rather than restrictive. Those skilled in the art will appreciate that many different combinations of hardware, software, and firmware will be suitable for practicing the present invention. Moreover, other implementations of the invention will be apparent to those skilled in the art from consideration of the specification and practice of the invention disclosed herein. Various aspects and/or components of the described embodiments may be used singly or in any combination in the server arts. It is intended that the specification and examples be considered as exemplary only, with a true scope of the invention being indicated by the following claims.

## Claims

1. A method of creating a customized IT infrastructure, the method comprising:
receiving IT environment request from a user via a user interface or API, the request including at least a type of server, amount of disk storage, type of operating system, and number and type of applications.
providing the request to a central processing system;
operating the central processing system to execute the request in a series of processes in comparison to available inventory to:
select a server (510), according to the type of server of the request, from a plurality of available servers and allocate the server as an assigned server to the user;
select a storage device (520), according to the amount of disk storage of the request, from a storage facility and allocate the storage device as an assigned storage facility to the user;
couple the assigned server to the assigned storage facility;
install and configure software, according to the type of operating system, and number and type of applications of the request, onto the assigned server; and,
connect the assigned server to a communication network.

2. The method of claim 1, wherein coupling the assigned server to the assigned storage facility comprises interposing a backend network between the plurality of servers and the network storage facility, and operating switches of the backend network to enable communication between the assigned server and the assigned storage facility.

3. The method of claim 1, wherein connecting the assigned server to a communication network comprises coupling the plurality of servers to a frontend network and operating switches of the frontend network to enable communication between the assigned server and the communication network.

4. The method of claim 3, wherein connecting the assigned server to the communication network further comprises assigning firewall from a pool of firewall resources to the assigned server.

5. The method of claim 1, further comprising: operating a monitoring module to monitor the inventory of available hardware and software components and using predictive calculations to issue a notice when more components are needed to be added.

6. The method of claim 1, further comprising operating the central processing system to automatically assign and track seat licenses to the user according to the user's request, and install software onto the server according to the seat licenses.

7. The method of claim 1, further comprising operating the central processing system to assign an automated backup and archive policy according to the request of the user.

8. The method of claim 1, further comprising enabling the user to apply API function calls to control the customized IT infrastructure.

9. The method of claim 8, further comprising constructing a library of scripts and enabling the user access to apply any script from the library to the customized IT infrastructure.

10. The method of claim 1, further comprising operating the central processing system to issue alerts when resources of the customized IT infrastructure should be increased or decreased.

11. The method of claim 10, further comprising operating the central processing system to provide the user with an estimated cost associated with resources increase or decrease.

12. The method of claim 1, further comprising operating the central processing system to store a network environment store point, enabling restoring of the entire customized IT infrastructure.

13. The method of claim 12, wherein storing a network environment store point comprises storing data representing configuration of the customized IT infrastructure's servers, storage, OS, applications, storage network, network switches and routers, Internet connectivity, Intranet connectivity, firewall, IDS, IPS and load balancing.

14. The method of claim 1, further comprising operating the central processing system to store a snapshot of the data stored in the storage device.

15. The method of claim 1, wherein when a storage disk of the storage resources is released to the storage facility, the central processing system is operated to wipe the storage disk by writing patterns of 1's, 0's and random data patterns.

16. The method of claim 1, further comprising: upon receiving an performance change request, operating the central processing system to migrate the assigned server to another server from a plurality of available servers and restoring the customized IT infrastructure utilizing the another server.

17. The method of claim 1, further comprising: upon receiving a repurpose request, operating the central processing system to store a snapshot of the assigned server and reboot the server using a modified configuration.

18. The method of claim 17, further comprising: upon receiving a request to restore a repurposed server, operating the central processing system to reboot the repurposed server the image of the assigned server.

19. The method of claim 1, further comprising: upon receiving a request to clone the customized IT infrastructure, operating the central processing system to:
select a second server from a plurality of available servers, and allocate the second server as an assigned cloned server to the user;
couple the assigned cloned server to the assigned image storage facility; and,
connect the assigned cloned server to a communication network.

20. The method of claim 1, further comprising storing a golden image representing an IT infrastructure of a predetermined configuration, and when the IT environment request specifies to replicate the golden image, modifying the operations of the central processing system to:
select the assigned server such that it has performance characteristics correlated to specification of the golden image;
select the storage device such that it has performance characteristics correlated to specification of the golden image; and,
connect the assigned cloned server to a communication network according to specification of the golden image.

21. The method of claim 1, further comprising, storing in the central processing system a list of users and enforcing an authority level corresponding to each user.

22. The method of claim 1, further comprising, storing in the central processing system a list of locks, each lock identifying a resource and at least one action that may not be performed upon the resource without authorization.

23. The method of claim 1, further comprising storing a plurality of IT environment images submitted by users, each representing an IT infrastructure of a predetermined configuration, and providing the list to other users.

24. The method of claim 1, further comprising providing remote user access to the assigned server at the keyboard, video, and mouse level, including access to bios level boot screens and command funds.

25. The method of claim 1, further comprising providing remote mounting utility, enabling a user to remotely mount a volume to the assigned server.

26. A system capable of creating a customized server environment in real time, the system comprising:
a plurality of servers;
a plurality of storage disks;
a switched network linking the plurality of servers to the plurality of storage disks;
software components for a server infrastructure;
a provisioning engine programmed to, upon receiving a user's instructions to generate a customized server environment, the instructions including at least a type of server, amount of disk storage, type of operating system, and number and type of applications:
a. take inventory of the plurality of servers, plurality of storage disks, and software components;
b. assign at least one server (510) according to the type of server of the instructions, and one storage disk (520) according to the amount of disk storage of the instructions, to the user to thereby define assigned computing resources and assigned storage resources dedicated to the user;
c. configure the switched network to couple the assigned computing resources and assigned storage resources;
d. configure the computing resources and assigned storage resources according to specification referenced by the user's instructions; and,
e. install on the computing resources appropriate software components, according to the type of operating system, and number and type of applications of the instructions, to thereby provide a customized server environment.

27. The system of claim 26, wherein the switched network comprises a backend network positioned between the plurality of servers and plurality of storage disks and a frontend network coupled between the plurality of servers and at least one of the Internet and an Intranet.

28. The system of claim 26, further comprising a storage network coupling the plurality of storage disks to the backend network.

29. The system of claim 27, wherein the frontend network comprises a network switch and at least one intelligent high speed interconnect module, and wherein the network switch couples the intelligent high speed interconnect module to at least one of the Internet and Intranet.

30. The system of claim 26, further comprising a secure portal enabling user communication with the provisioning engine.

31. The system of claim 30, wherein the portal comprises a user interface and an administrator interface.

32. The system of claim 26, further comprising firewall facility, and wherein the provisioning engine is further configures to assign firewall to the customized server environment according to the specification referenced by the user's instructions.

33. The system of claim 26, further comprising a plurality of application adapters, each configured for communication between the provisioning engine and at least one of: compute servers, storage, OS, applications, storage network, network switches, routers, Internet connectivity, intranet connectivity, firewall, intrusion detection system (IDS), intrusion prevention system (IPS), load balancing and third party Enterprise applications.

34. The system of claim 26, wherein the plurality of servers comprise a plurality of individual interconnected servers situated in server cabinets, wherein the plurality of storage disks comprises a network storage, and wherein the switched network comprises a backend network positioned between the cabinets and the network storage, and a frontend network coupled between the cabinets and at least one of the Internet and an intranet.

35. The system of claim 34, wherein the frontend network comprises a first array of server switches and the backend network comprises a second array of server switches.

36. The system of claim 26, further comprising configuration inventory facility storing and tracking physical and logical inventory of all resources needed to support the automated near real time provisioning of IT assets.

37. The system of claim 26, further comprising authorization module storing authorize custodian's authorization roles for all other users for a designated account in the system.

38. The system of claim 26, further comprising a lock mechanism storing an authorized user's production lock on any component to a specific combination of group of users allowed to access the system to thereby prevents accidental change of an IT resource without having to confirm and authenticate that change to ensure availability of assets in the system.

39. The system of claim 26, further comprising an enterprise adapter coupling the system to other third party enterprise modules.

40. The system of claim 26, further comprising data replication module selectively replicating data stored on the plurality of storage disks.

41. The system of claim 26, further comprising disaster recovery module storing:
environment configuration specifying hardware and software configuration of the customized server environment; and,
data stored on the assigned storage resources.

42. The system of claim 26, further comprising a keyboard, video, and mouse (KVM) switch and KVM adapter providing remote user access to the assigned server at the keyboard, video, and mouse level, including access to bios level boot screens and command functions.

43. The system of claim 26, further comprising remote mounting utility, enabling a user to remotely mount a volume to the assigned server.

44. A computer readable storage medium holding computer software for executing on a destination computer, the software embodying a method comprising:
providing a user with an interface to enter user's instructions to generate a customized server environment;
upon receiving the user's instructions, the instructions including at least a type of server, amount of disk storage, type of operating system, and number and type of applications, performing the steps:
f. query available servers to find a server (510) according to the type of server of the instructions, and assign the server to the user to thereby define assigned computing resources dedicated to the user;
g. query available storage disks to find a disk according to the amount of disk storage of the instructions, and assign the disk to the user to thereby define assigned storage resources dedicated to the user;
h. configure a switched network to couple the assigned computing resources and assigned storage resources;
i. configure the computing resources and assigned storage resources according to specification referenced by the user's instructions; and,
j. install on the computing resources appropriate software components according to the type of operating system, and number and type of applications of the instructions, to thereby provide a customized server environment.

## Patentansprüche

1. Verfahren zum Erzeugen einer kundenspezifischen IT-Infrastruktur, wobei das Verfahren umfasst:
Empfangen einer IT-Umgebungs-Anforderung von einem Benutzer über eine Benutzerschnittstelle oder API, wobei die Anforderung wenigstens einen Typ eines Servers, eine Menge an Plattenspeicherplatz, einen Typ des Betriebssystems und Anzahl und Typ von Anwendungen enthält;
Liefern der Anforderung an ein zentrales Verarbeitungssystem;
Betreiben des zentralen Verarbeitungssystems, um die Anforderung in einer Reihe von Prozessen im Vergleich zu einem verfügbaren Bestand auszuführen, um:
einen Server (510) entsprechend dem Servertyp der Anforderung aus einer Mehrzahl an verfügbaren Servern auszuwählen und den Server als einen dem Benutzer zugeordneten Server zuzuweisen;
Auswählen einer Speichervorrichtung (520) entsprechend der Menge des Plattenspeicherplatzes der Anforderung aus einer Speichereinrichtung und Zuweisen der Speichervorrichtung als eine dem Benutzer zugeordnete Speichereinrichtung;
Koppeln des zugeordneten Servers mit der zugeordneten Speichereinrichtung;
Installieren und Konfigurieren von Software auf dem zugeordneten Server entsprechend dem Typ des Betriebssystems und entsprechend Anzahl und Typ der Anwendungen der Anforderung; und
Verbinden des zugeordneten Servers mit einem Kommunikationsnetz.

2. Verfahren nach Anspruch 1, wobei das Koppeln des zugeordneten Servers an die zugeordnete Speichereinrichtung das Zwischensetzen eines Backend-Netzes zwischen die Mehrzahl der Server und die Netzspeichereinrichtung, sowie das Betätigen von Schalteinrichtungen des Backend-Netzes umfasst, um eine Kommunikation zwischen dem zugeordneten Server und der zugeordneten Speichereinrichtung zu ermöglichen.

3. Verfahren nach Anspruch 1, wobei das Verbinden des zugeordneten Servers mit dem Kommunikationsnetz das Koppeln der Mehrzahl an Servern mit einem Frontend-Netz und das Betätigen von Schalteinrichtungen des Frontend-Netzes umfasst, um eine Kommunikation zwischen dem zugeordneten Server und dem Kommunikationsnetz zu ermöglichen.

4. Verfahren nach Anspruch 3, wobei das Verbinden des zugeordneten Servers mit dem Kommunikationsnetz ferner das Zuordnen eines Zugangsschutzsystems aus einem Pool von Zugangsschutzsystembetriebsmitteln zu dem zugeordneten Server umfasst.

5. Verfahren nach Anspruch 1, ferner umfassend: Betreiben eines Überwachungsmoduls zum Überwachen des Bestands verfügbarer Hardware- und Software-Komponenten und Verwenden von Vorhersageberechnungen, um eine Meldung auszugeben, wenn es nötig ist, mehr Komponenten hinzuzufügen.

6. Verfahren nach Anspruch 1, das ferner das Betreiben des zentralen Verarbeitungssystems umfasst, um automatisch Platzlizenzen dem Benutzer zuzuordnen und zu verfolgen, entsprechend der Anforderung des Benutzers, und um entsprechend den Platzlizenzen Software auf dem Server zu installieren.

7. Verfahren nach Anspruch 1, das ferner das Betreiben des zentralen Verarbeitungssystems umfasst, um eine automatisierte Sicherungs- und Archivierungsstrategie entsprechend der Anforderung des Benutzers zuzuordnen.

8. Verfahren nach Anspruch 1, das ferner umfasst, dem Benutzer zu ermöglichen, API-Funktionsaufrufe anzuwenden, um die kundenspezifische IT-Infrastruktur zu kontrollieren.

9. Verfahren nach Anspruch 8, das ferner das Erstellen einer Bibliothek von Scripten und das Ermöglichen von Zugriff für den Benutzer umfasst, um irgendein Script aus der Bibliothek auf die kundenspezifische IT-Infrastruktur anzuwenden.

10. Verfahren nach Anspruch 1, das ferner das Betreiben des zentralen Verarbeitungssystems umfasst, um Warnungen auszugeben, wenn Betriebsmittel der kundenspezifischen IT-Infrastruktur vergrößert oder verringert werden sollten.

11. Verfahren nach Anspruch 10, das ferner das Betreiben des zentralen Verarbeitungssystems umfasst, um dem Benutzer geschätzte Kosten bereitzustellen, die mit der Vergrößerung oder Verringerung von Betriebsmitteln einhergehen.

12. Verfahren nach Anspruch 1, das ferner das Betreiben des zentralen Verarbeitungssystems umfasst, um einen Netzwerkumgebungsspeicherpunkt zu speichern, der die Wiederherstellung der gesamten kundenspezifischen IT-Infrastruktur ermöglicht.

13. Verfahren nach Anspruch 12, wobei das Speichern eines Netzwerkumgebungsspeicherpunktes das Speichern von Daten umfasst, die eine Konfiguration der Server, der Speicher, des Betriebssystems, der Anwendungen, des Speichernetzwerks, der Netzwerkschalteinrichtung und der Router, der Internetverbindungen, der Intranetverbindungen, des Zugangsschutzsystems, des IDS, des IPS und des Lastenausgleichs der kundenspezifischen IT-Infrastruktur repräsentieren.

14. Verfahren nach Anspruch 1, das ferner das Betreiben des zentralen Verarbeitungssystems umfasst, um eine Momentaufnahme der in der Speichervorrichtung gespeicherten Daten zu speichern.

15. Verfahren nach Anspruch 1, wobei dann, wenn eine Speicherplatte der Speicherbetriebsmittel für die Speichereinrichtung freigegeben wird, das zentrale Verarbeitungssystem so betrieben wird, dass es die Speicherplatte durch Schreiben von Mustern von Einsen und Nullen und Zufallsdatenmustern unwiederbringlich löscht.

16. Verfahren nach Anspruch 1, ferner umfassend: bei Empfang einer Leistungsänderungsanforderung, Betreiben des zentralen Verarbeitungssystems, um den zugeordneten Server auf einen weiteren Server aus einer Mehrzahl an verfügbaren Servern zu migrieren und die kundenspezifische IT-Infrastruktur unter Verwendung des weiteren Servers wiederherzustellen.

17. Verfahren nach Anspruch 1, ferner umfassend: bei Empfang einer Umwidmungsanforderung, Betreiben des zentralen Verarbeitungssystems, um eine Momentaufnahme des zugeordneten Servers zu speichern und den Server unter Verwendung einer modifizierten Konfiguration neu zu starten.

18. Verfahren nach Anspruch 17, ferner umfassend: bei Empfang einer Anforderung zum Wiederherstellen eines umgewidmeten Servers, Betreiben des zentralen Verarbeitungssystems, um auf dem umgewidmeten Server das Abbild des zugeordneten Servers neu zu starten.

19. Verfahren nach Anspruch 1, ferner umfassend: bei Empfang einer Anforderung zum Klonen der kundenspezifischen IT-Infrastruktur, Betreiben des zentralen Verarbeitungssystems, um:
einen zweiten Server aus einer Mehrzahl verfügbarer Server auszuwählen, und den zweiten Server als einen zugeordneten geklonten Server dem Benutzer zuzuweisen;
den zugeordneten geklonten Server mit der zugeordneten Abbildspeichereinrichtung zu koppeln; und
den zugeordneten geklonten Server mit einem Kommunikationsnetz zu verbinden.

20. Verfahren nach Anspruch 1, das ferner das Speichern eines goldenen Abbilds umfasst, das eine IT-Infrastruktur einer vorbestimmten Konfiguration repräsentiert, und dann, wenn die IT-Umgebungs-Anforderung spezifiziert, das goldene Abbild zu replizieren, Modifizieren der Operationen des zentralen Verarbeitungssystems, um:
den zugeordneten Server auszuwählen, so dass er Leistungseigenschaften aufweist, die mit der Spezifikation des goldenen Abbilds korrelieren;
die Speichervorrichtung auszuwählen, so dass sie Leistungseigenschaften aufweist, die mit der Spezifikation des goldenen Abbilds korrelieren; und
den zugeordneten geklonten Server mit einem Kommunikationsnetz entsprechend der Spezifikation des goldenen Abbilds zu verbinden.

21. Verfahren nach Anspruch 1, das ferner das Speichern einer Liste von Benutzern im zentralen Verarbeitungssystem und das Erzwingen eines Autoritätsniveaus entsprechend jedem Benutzer umfasst.

22. Verfahren nach Anspruch 1, das ferner das Speichern einer Liste von Sperren im zentralen Verarbeitungssystem umfasst, wobei jede Sperre ein Betriebsmittel und wenigstens einen Vorgang identifiziert, die bei dem Betriebsmittel ohne Autorisierung nicht durchgeführt werden dürfen.

23. Verfahren nach Anspruch 1, das ferner das Speichern einer Mehrzahl an IT-Umgebungsabbildern, die von Benutzern vorgelegt worden sind, wobei jedes eine IT-Infrastruktur einer vorbestimmten Konfiguration repräsentiert, und das Bereitstellen der Liste für andere Benutzer umfasst.

24. Verfahren nach Anspruch 1, das ferner das Bereitstellen eines Fernbenutzerzugriffs auf den zugeordneten Server auf Tastatur-, Video- und Maus-Ebene, einschließlich des Zugriffs auf BIOS-Ebene-Startbildschirme und Befehlsmittel umfasst.

25. Verfahren nach Anspruch 1, das ferner das Bereitstellen eines Fern-Mounting-Dienstprogramms umfasst, das einem Benutzer ermöglicht, aus der Ferne einen Datenträger auf den zugeordneten Server zu mounten.

26. System, das eine kundenspezifische Server-Umgebung in Echtzeit erzeugen kann, wobei das System umfasst:
eine Mehrzahl an Servern;
eine Mehrzahl an Speicherplatten;
ein vermitteltes Netzwerk, das die Mehrzahl an Servern und die Mehrzahl an Speicherplatten verknüpft;
Softwarekomponenten für eine Server-Infrastruktur;
eine Beschaffungsmaschine, die so programmiert ist, dass sie beim Empfangen von Befehlen eines Benutzers zur Erzeugung einer kundenspezifischen Server-Umgebung, wobei die Befehle wenigstens einen Servertyp, eine Menge an Plattenspeicherraum, einen Typ eines Betriebssystems und Anzahl und Typ von Anwendungen enthalten, ausführt:
a. Vornehmen einer Bestandsaufnahme der Mehrzahl an Servern, der Mehrzahl an Speicherplatten und der Software-Komponenten;
b. Zuweisen wenigstens eines Servers (510) entsprechend dem Servertyp der Befehle, und einer Speicherplatte (520) entsprechend der Menge an Plattenspeicherplatz der Befehle, an den Benutzer, um somit zugewiesene Rechenbetriebsmittel und zugewiesene Speicherbetriebsmittel zu definieren, die für den Benutzer reserviert sind;
c. Konfigurieren des vermittelten Netzwerks, um die zugewiesenen Rechenbetriebsmittel und die zugewiesenen Speicherbetriebsmittel zu koppeln;
d. Konfigurieren der Rechenbetriebsmittel und der zugewiesenen Speicherbetriebsmittel entsprechend der Spezifikation, auf die von den Befehlen des Benutzers Bezug genommen wird; und
e. Installieren geeigneter Software-Komponenten auf den Rechenbetriebsmitteln entsprechend dem Typ des Betriebssystems und Anzahl und Typ der Anwendungen der Befehle, um somit eine kundenspezifische Server-Umgebung zu schaffen.

27. System nach Anspruch 26, wobei das vermittelte Netzwerk ein Backend-Netzwerk, das zwischen der Mehrzahl an Servern und der Mehrzahl an Speicherplatten angeordnet ist, sowie ein Frontend-Netzwerk umfasst, das zwischen der Mehrzahl an Servern und wenigstens einem Internet und/oder einem Intranet angeschlossen ist.

28. System nach Anspruch 26, das ferner ein Speichernetzwerk umfasst, das die Mehrzahl an Speicherplatten mit dem Backend-Netzwerk koppelt.

29. System nach Anspruch 27, wobei das Frontend-Netzwerk eine Netzwerkschalteinrichtung umfasst, sowie wenigstens ein intelligentes Hochgeschwindigkeitsverbindungsmodul, und wobei die Netzwerkschalteinrichtung das intelligente Hochgeschwindigkeitsverbindungsmodul mit wenigstens dem Internet und/oder einem Intranet koppelt.

30. System nach Anspruch 26, das ferner ein zweites Portal umfasst, das eine Benutzerkommunikation mit der Beschaffungsmaschine ermöglicht.

31. System nach Anspruch 30, wobei das Portal eine Benutzerschnittstelle und eine Administratorschnittstelle umfasst.

32. System nach Anspruch 26, das ferner eine Zugangsschutzsystemeinrichtung umfasst, wobei die Beschaffungsmaschine ferner so ausgeführt ist, dass sie ein Zugangsschutzsystem der kundenspezifischen Server-Umgebung entsprechend der Spezifikation, auf die von den Befehlen des Benutzers Bezug genommen wird, zuweist.

33. System nach Anspruch 26, das ferner eine Mehrzahl an Anwendungsadaptern umfasst, die jeweils konfiguriert sind für eine Kommunikation zwischen der Beschaffungsmaschine und wenigstens einem Element aus der Gruppe: Rechen-Server, Speicher, Betriebssystem, Anwendungen, Speichernetzwerk, Netzwerkschalteinrichtungen, Router, Internetverbindung, Intranetverbindung, Zugangsschutzsystem, Eindringungserfassungssystem (IDS), Eindringungsverhinderungssystem (IPS), Lastenausgleich und Drittunternehmensanwendungen.

34. System nach Anspruch 26, wobei die Mehrzahl an Servern eine Mehrzahl an individuellen verbundenen Servern umfasst, die in Server-Kabinen angeordnet sind, wobei die Mehrzahl an Speicherplatten einen Netzwerkspeicher umfasst, und wobei das vermittelte Netzwerk ein Backend-Netzwerk, das zwischen den Kabinen und dem Netzwerkspeicher angeordnet ist, und ein Frontend-Netzwerk, das zwischen den Kabinen und wenigstens dem Internet und/oder einem Intranet angeschlossen ist, umfasst.

35. System nach Anspruch 34, wobei das Frontend-Netzwerk eine erste Anordnung von Server-Schalteinrichtungen umfasst und das Backend-Netzwerk eine zweite Anordnung von Server-Schalteinrichtungen umfasst.

36. System nach Anspruch 26, das ferner eine Konfigurationsbestandseinrichtung umfasst, die physikalischen und logischen Bestand aller Betriebsmittel, die zum Unterstützen der automatischen Nahezu-Echtzeit-Beschaffung von IT-Anlagen erforderlich sind, speichert und verfolgt.

37. System nach Anspruch 26, das ferner ein Autorisierungsmodul umfasst, das Autorisierungsverwalter-Autorisierungsrollen für alle anderen Benutzer für ein designiertes Konto im System speichert.

38. System nach Anspruch 26, das ferner eine Sperreinrichtung umfasst, die eine Produktionssperre eines autorisierten Benutzers für irgendeine Komponente einer spezifischen Kombination einer Gruppe von Benutzern speichert, denen erlaubt ist, auf das System zuzugreifen, um somit eine versehentliche Änderung eines IT-Betriebsmittels, ohne diese Änderung bestätigen und authentisieren zu müssen, zu verhindern, um die Verfügbarkeit von Anlagen im System sicherzustellen.

39. System nach Anspruch 26, das ferner einen Unternehmensadapter umfasst, der das System mit anderen Drittunternehmensmodulen koppelt.

40. System nach Anspruch 26, das ferner ein Datenreplizierungsmodul umfasst, das Daten, die auf der Mehrzahl an Speicherplatten gespeichert sind, selektiv repliziert.

41. System nach Anspruch 26, das ferner ein Havarie-Rettungsmodul umfasst, das speichert:
eine Umgebungskonfiguration, die eine Hardware- und Software-Konfiguration der kundenspezifischen Server-Umgebung spezifiziert; und
Daten, die auf den zugeordneten Speicherbetriebsmitteln gespeichert sind.

42. System nach Anspruch 26, das ferner eine Tastatur-, Video- und Maus-(KVM)-Schalteinrichtung und einen KVM-Adapter umfasst, die einen Fernbenutzerzugriff auf den zugeordneten Server auf Tastatur-, Video- und Maus-Ebene einschließlich eines Zugriffs auf BIOS-Ebene-Startbildschirme und Befehlsfunktionen bereitstellt.

43. System nach Anspruch 26, das ferner ein Fern-Mounting-Dienstprogramm umfasst, das einem Benutzer ermöglicht, einen Datenträger aus der Ferne auf den zugeordneten Server zu mounten.

44. Computerlesbares Speichermedium, das Computersoftware für die Ausführung auf einem Zielcomputer enthält, wobei die Software ein Verfahren verkörpert, das umfasst:
Bereitstellen einer Schnittstelle für einen Benutzer zum Eingeben von Benutzerbefehlen, um eine kundenspezifische Server-Umgebung zu erzeugen;
bei Empfang der Benutzerbefehle, wobei die Befehle wenigstens einen Servertyp, eine Menge an Plattenspeicherplatz, einen Typ des Betriebssystems und Anzahl und Typ der Anwendungen enthalten, Ausführen der Schritte:
f. Abfragen verfügbarer Server, um einen Server (510) entsprechend dem Servertyp der Befehle zu finden, und Zuweisen des Servers zu dem Benutzer, um somit zugewiesene Rechenbetriebsmittel zu definieren, die für den Benutzer reserviert sind;
g. Abfragen verfügbarer Speicherplatten, um eine Platte entsprechend der Menge an Plattenspeicherplatz der Befehle zu finden, und Zuweisen der Platte zu dem Benutzer, um somit zugewiesene Speicherbetriebsmittel zu definieren, die für den Benutzer reserviert sind;
h. Konfigurieren eines vermittelten Netzwerks, um die zugewiesenen Rechenbetriebsmittel und die zugewiesenen Speicherbetriebsmittel zu koppeln;
i. Konfigurieren der Rechenbetriebsmittel und der zugewiesenen Speicherbetriebsmittel entsprechend der Spezifikation, auf die von den Benutzerbefehlen Bezug genommen wird; und
j. Installieren geeigneter Software-Komponenten auf den Rechenbetriebsmitteln entsprechend dem Typ des Betriebssystems und Anzahl und Typ der Anwendungen der Befehle, um somit eine kundenspezifische Server-Umgebung bereitzustellen.

## Revendications

1. Procédé de création d'une infrastructure de technologie de l'information personnalisée, le procédé comprenant :
la réception d'une demande d'environnement de technologie de l'information à partir d'un utilisateur par l'intermédiaire d'une interface d'utilisateur ou d'une interface de programmation d'application, la demande comprenant au moins un type de serveur, une quantité de mémorisation de disque, un type de système d'exploitation et un nombre et un type d'applications ;
la délivrance de la demande à un système de traitement central ;
l'utilisation du système de traitement central pour exécuter la demande dans une série de traitements en comparaison avec un inventaire disponible, afin de :
sélectionner un serveur (510), en fonction du type de serveur de la demande, parmi une pluralité de serveurs disponibles, et affecter le serveur comme serveur attribué à l'utilisateur ;
sélectionner un dispositif de mémorisation (520), en fonction de la quantité de mémorisation de disque de la demande, à partir d'une installation de mémorisation, et attribuer le dispositif de mémorisation comme installation de mémorisation attribuée à l'utilisateur ;
coupler le serveur attribué à l'installation de mémorisation attribuée ;
installer et configurer un logiciel, en fonction du type de système d'exploitation, et du nombre et du type d'applications de la demande, sur le serveur attribué ; et
connecter le serveur attribué à un réseau de communication.

2. Procédé selon la revendication 1, dans lequel le couplage du serveur attribué à l'installation de mémorisation attribuée comprend l'interposition d'un réseau principal entre la pluralité de serveurs et l'installation de mémorisation de réseau, et l'actionnement de commutateurs du réseau principal afin de permettre une communication entre le serveur attribué et l'installation de mémorisation attribuée.

3. Procédé selon la revendication 1, dans lequel la connexion du serveur attribué à un réseau de communication comprend le couplage de la pluralité de serveurs à un réseau principal et l'actionnement de commutateurs du réseau principal afin de permettre une communication entre le serveur attribué et le réseau de communication.

4. Procédé selon la revendication 3, dans lequel a connexion du serveur attribué au réseau de communication comprend de plus l'attribution d'un pare-feu parmi des ressources de pare-feu communes au serveur attribué.

5. Procédé selon la revendication 1, comprenant de plus : l'utilisation d'un module de contrôle pour contrôler l'inventaire de composants de matériel et de logiciel disponibles et l'utilisation de calculs prédictifs pour délivrer un avertissement lorsqu'il est nécessaire d'ajouter davantage de composants.

6. Procédé selon la revendication 1, comprenant de plus l'utilisation du système de traitement central pour attribuer et suivre automatiquement des licences d'emplacement pour l'utilisateur en fonction de la demande de l'utilisateur, et installer un logiciel sur le serveur en fonction des licences d'emplacement.

7. Procédé selon la revendication 1, comprenant de plus l'utilisation du système de traitement central pour attribuer une politique de sauvegarde et d'archivage automatique en fonction de la demande de l'utilisateur.

8. Procédé selon la revendication 1, comprenant de plus l'autorisation à l'utilisateur d'appliquer des appels de fonction d'interface de programmation d'application afin de commander l'infrastructure de technologie de l'information personnalisée.

9. Procédé selon la revendication 8, comprenant de plus la construction d'une bibliothèque de scripts et l'autorisation d'accès de l'utilisateur pour appliquer un quelconque script de la bibliothèque à l'infrastructure de technologie de l'information personnalisée.

10. Procédé selon la revendication 1, comprenant de plus l'utilisation du système de traitement central pour délivrer des alertes lorsque les ressources de l'infrastructure de technologie de l'information personnalisée devraient être augmentées ou diminuées.

11. Procédé selon la revendication 10, comprenant de plus l'utilisation du système de traitement central pour indiquer à l'utilisateur un coût estimé associé à une augmentation ou à une diminution des ressources.

12. Procédé selon la revendication 1, comprenant de plus l'utilisation du système de traitement central pour mémoriser un point de mémorisation d'environnement de réseau, permettant la restauration de l'ensemble de l'infrastructure de technologie de l'information personnalisée.

13. Procédé selon la revendication 12, dans lequel la mémorisation d'un point de mémorisation d'environnement de réseau comprend la mémorisation de données représentant la configuration des serveurs de l'infrastructure de technologie de l'information personnalisée, de la mémoire, du système d'exploitation, des applications, du réseau de mémorisation, des routeurs et des commutateurs de réseau, de la connectivité Internet, de la connectivité intranet, des pare-feu, du système de détection d'intrusion (IDS), du système de prévention d'intrusion (IPS) et de l'équilibrage de charge de l'infrastructure de technologie de l'information personnalisée.

14. Procédé selon la revendication 1, comprenant de plus l'utilisation du système de traitement central afin de mémoriser une copie instantanée des données mémorisées dans le dispositif de mémorisation.

15. Procédé selon la revendication 1, dans lequel, lorsqu'un disque de mémorisation des ressources de mémorisation est libéré pour l'installation de mémorisation, le système de traitement central est utilisé afin de nettoyer le disque de mémorisation par écriture de motifs de 1, de 0 et de motifs de données aléatoires.

16. Procédé selon la revendication 1, comprenant de plus : lors de la réception d'une demande de changement de performances, l'utilisation du système de traitement central afin de provoquer une migration du serveur attribué à un autre serveur parmi une pluralité de serveurs disponibles et la restauration de l'infrastructure de traitement de l'information personnalisée à l'aide de l'autre serveur.

17. Procédé selon la revendication 1, comprenant de plus : lors de la réception d'une demande de réorientation d'usage, l'utilisation du système de traitement central afin de mémoriser une copie instantanée du serveur attribué et de réamorcer le serveur en utilisant une configuration modifiée.

18. Procédé selon la revendication 17, comprenant de plus : lors de la réception d'une demande pour restaurer un serveur dont l'usage a été réorienté, l'utilisation du système de traitement central pour réamorcer dans le serveur dont l'usage a été réorienté l'image du serveur attribué.

19. Procédé selon la revendication 1, comprenant de plus : lors de la réception d'une demande pour cloner l'infrastructure de technologie de l'information personnalisée, l'utilisation du système de traitement central pour :
sélectionner un deuxième serveur parmi une pluralité de serveurs disponibles, et affecter le deuxième serveur comme serveur cloné attribué à l'utilisateur ;
coupler le serveur cloné attribué à l'installation de mémorisation d'image attribuée ; et
connecter le serveur cloné attribué à un réseau de communication.

20. Procédé selon la revendication 1, comprenant de plus la mémorisation d'une image en or représentant une infrastructure de technologie de l'information ayant une configuration prédéterminée, et lorsque la demande d'environnement de technologie de l'information ordonne la réplication de l'image en or, la modification des opérations du système de traitement central afin de :
sélectionner le serveur attribué de telle sorte qu'il ait des caractéristiques de performances associées aux caractéristiques de l'image en or ;
sélectionner le dispositif de mémorisation de telle sorte qu'il ait des caractéristiques de performances associées aux caractéristiques de l'image en or ; et
connecter le serveur cloné attribué à un réseau de communication en fonction des caractéristiques de l'image en or.

21. Procédé selon la revendication 1, comprenant de plus la mémorisation dans le système de traitement central d'une liste d'utilisateurs et la mise en place d'un niveau d'autorité correspondant à chaque utilisateur.

22. Procédé selon la revendication 1, comprenant de plus la mémorisation dans le système de traitement central d'une liste de verrous, chaque verrou identifiant une ressource et au moins une action qui ne peut pas être exécutée sur la ressource sans autorisation.

23. Procédé selon la revendication 1, comprenant de plus la mémorisation d'une pluralité d'images d'environnement de technologie de l'information soumises par des utilisateurs, représentant chacune une infrastructure de technologie de l'information ayant une configuration prédéterminée, et la délivrance de la liste à d'autres utilisateurs.

24. Procédé selon la revendication 1, comprenant de plus la délivrance d'un accès d'utilisateur à distance au serveur attribué au niveau du clavier, de la vidéo et de la souris, comprenant l'accès à des fonctions de commande et à des écrans d'amorçage au niveau du BIOS.

25. Procédé selon la revendication 1, comprenant de plus la fourniture d'une capacité de montage à distance, permettant à un utilisateur de monter à distance un volume pour le serveur attribué.

26. Système susceptible de créer un environnement de serveur personnalisé en temps réel, le système comprenant :
une pluralité de serveurs ;
une pluralité de disques de mémorisation ;
un réseau commuté reliant la pluralité de serveurs à la pluralité de disques de mémorisation ;
des composants de logiciel pour une infrastructure de serveur ;
un moteur d'approvisionnement programmé pour, lors de la réception d'instructions d'un utilisateur pour générer un environnement de serveur personnalisé, les instructions comprenant au moins un type de serveur, une quantité de mémorisation de disque, un type de système d'exploitation, et un nombre et un type d'applications :
a. effectuer un inventaire de la pluralité de serveurs, de la pluralité de disques de mémorisation et des composants de logiciel ;
b. affecter au moins un serveur (510) en fonction du type de serveur des instructions, et un disque de mémorisation (520) en fonction de la quantité de mémorisation de disque des instructions, à l'utilisateur, afin de définir ainsi des ressources de calcul attribuées et des ressources de mémorisation attribuées réservées à l'utilisateur ;
c. configurer le réseau commuté de façon à coupler les ressources de calcul attribuées et les ressources de mémorisation attribuées ;
d. configurer les ressources de calcul et les ressources de mémorisation attribuées en fonction de caractéristiques référencées par les instructions de l'utilisateur ; et
e. installer sur les ressources de calcul des composants de logiciel appropriés, en fonction du type de système d'exploitation, et du nombre et du type d'applications des instructions, de façon à produire ainsi un environnement de serveur personnalisé.

27. Système selon la revendication 26, dans lequel le réseau commuté comprend un réseau principal positionné entre la pluralité de serveurs et la pluralité de disques de mémorisation, et un réseau frontal couplé entre la pluralité de serveurs et au moins l'un parmi l'Internet et un Intranet.

28. Système selon la revendication 26, comprenant de plus un réseau de mémorisation couplant la pluralité de disques de mémorisation au réseau principal.

29. Système selon la revendication 27, dans lequel le réseau principal comprend un commutateur de réseau et au moins un module d'interconnexion à grande vitesse intelligent, et dans lequel le commutateur de réseau couple le module d'interconnexion à grande vitesse intelligent à au moins l'un parmi l'Internet et un Intranet.

30. Système selon la revendication 26, comprenant de plus un portail sécurisé permettant une communication d'utilisateur avec le moteur d'approvisionnement.

31. Système selon la revendication 30, dans lequel le portail comprend une interface d'utilisateur et une interface d'administrateur.

32. Système selon la revendication 26, comprenant de plus une capacité de pare-feu, et dans lequel le moteur d'approvisionnement est en outre configuré de façon à attribuer un pare-feu à l'environnement de serveur personnalisé en fonction des caractéristiques référencées par les instructions de l'utilisateur.

33. Système selon la revendication 26, comprenant de plus une pluralité d'adaptateurs d'application, configurés chacun pour une communication entre le moteur d'approvisionnement et au moins l'un parmi : des serveurs de calcul, une mémoire, un système d'exploitation, des applications, un réseau de mémorisation, des commutateurs de réseau, des routeurs, une connectivité Internet, une connectivité Intranet, un pare-feu, un système de détection d'intrusion (IDS), un système de prévention d'intrusion (IPS), un équilibrage de charge et des applications d'entreprise tierces.

34. Système selon la revendication 26, dans lequel la pluralité de serveurs comprend une pluralité de serveurs interconnectés individuels situés dans des enceintes de serveur, dans lequel la pluralité de disques de mémorisation comprend une mémorisation en réseau, et dans lequel le réseau commuté comprend un réseau principal positionné entre les enceintes et la mémorisation en réseau, et un réseau frontal couplé entre les enceintes et au moins l'un parmi l'Internet et un intranet.

35. Système selon la revendication 34, dans lequel le réseau frontal comprend un premier groupement de commutateurs de serveur et le réseau principal comprend un deuxième réseau de commutateurs de serveur.

36. Système selon la revendication 26, comprenant de plus une capacité d'inventaire de configurations mémorisant et suivant l'inventaire physique et logique de toutes les ressources nécessaires pour supporter l'approvisionnement automatique en temps quasi réel d'actifs de technologie de l'information.

37. Système selon la revendication 26, comprenant de plus un module d'autorisation mémorisant des rôles d'autorisation de gardien d'autorisation pour tous les autres utilisateurs pour un compte désigné dans le système.

38. Système selon la revendication 26, comprenant de plus un mécanisme de verrouillage mémorisant un verrou de production d'utilisateur autorisé sur tout composant pour une combinaison spécifique de groupe d'utilisateurs autorisés à accéder au système, de façon à empêcher ainsi un changement accidentel d'une ressource de technologie de l'information sans avoir à confirmer et à authentifier ce changement pour assurer la disponibilité d'avoirs dans le système.

39. Système selon la revendication 26, comprenant de plus un adaptateur d'entreprises couplant le système à d'autres modules d'entreprise tiers.

40. Système selon la revendication 26, comprenant de plus un module de réplication de données répliquant de façon sélective des données mémorisées sur la pluralité de disques de mémorisation.

41. Système selon la revendication 26, comprenant de plus un module de récupération en cas de catastrophe, mémorisant :
une configuration d'environnement spécifiant une configuration de matériel et de logiciel de l'environnement de serveur personnalisé ; et
des données mémorisées sur les ressources de mémorisation attribuées.

42. Système selon la revendication 26, comprenant de plus un commutateur de clavier, de vidéo et de souris (KVM) et un adaptateur de KVM permettant un accès d'utilisateur à distance au serveur attribué au niveau du clavier, de la vidéo et de la souris, comprenant un accès à des fonctions de commande et à des écrans d'amorçage au niveau du BIOS.

43. Système selon la revendication 26, comprenant de plus une capacité de montage à distance, permettant à un utilisateur de monter à distance un volume pour le serveur attribué.

44. Support de mémorisation lisible par un ordinateur supportant un logiciel informatique pour l'exécution sur un ordinateur de destination, le logiciel mettant en oeuvre un procédé comprenant :
la fourniture à un utilisateur d'une interface pour entrer des instructions d'utilisateur afin de générer un environnement de serveur personnalisé ;
lors de la réception des instructions de l'utilisateur, les instructions comprenant au moins un type de serveur, une quantité de mémorisation de disque, un type de système d'exploitation, et un nombre et un type d'applications, la réalisation des étapes consistant à :
f. rechercher des serveurs disponibles afin de trouver un serveur (510) en fonction du type de serveur des instructions, et attribuer le serveur à l'utilisateur afin de définir ainsi des ressources de calcul attribuées réservées à l'utilisateur ;
g. rechercher des disques de mémorisation disponibles afin de trouver un disque en fonction de la quantité de mémorisation de disque des instructions, et attribuer le disque à l'utilisateur afin de définir ainsi des ressources de mémorisation attribuées réservées à l'utilisateur ;
h. configurer un réseau commuté afin de coupler les ressources de calcul attribuées et les ressources de mémorisation attribuées ;
i. configurer les ressources de calcul et les ressources de mémorisation attribuées en fonction de caractéristiques référencées par les instructions de l'utilisateur ; et
j. installer sur les ressources de calcul des composants de logiciel appropriés en fonction du type de système d'exploitation, et du nombre et du type d'applications des instructions, de façon à produire ainsi un environnement de serveur personnalisé.
